# EUROPEAN PATENT APPLICATION

(11) **EP 4 576 904 A1**
(43) Date of publication of application: **25.06.2025**
(21) Application number: 24214788.2
(22) Date of filing: 22.11.2024
(51) Int. Cl.: H04W 72/0453, H04W 72/20, H04W 76/15, H04W 72/02, H04W 72/563, H04W 84/12

(54) **COMMUNICATION APPARATUS, CONTROL METHOD, AND PROGRAM**

(30) Priority: 19.12.2023 JP 2023214036
(71) Applicant: CANON KABUSHIKI KAISHA, Tokyo 146-8501 (JP)
(72) Inventor: YOSHIKAWA, Yuki, Tokyo, 146-8501 (JP)
(74) Representative: Canon Europe Limited

(57) **Abstract**

A communication apparatus (101) capable of executing, with another communication apparatus (102), multi-link communication that complies with an IEEE802.11 standard series and uses a plurality of links corresponding to a plurality of frequencies, selects, in a case where the number of links used concurrently in the multi-link communication is increased, a frequency associated with a link to be added from a plurality of candidate frequencies, based on a predetermined condition, and notifies the another communication apparatus (102) of the selected frequency.

## Description

### BACKGROUND OF THE INVENTION

### Field of the Invention

The present invention relates to a frequency selection technique in a communication apparatus capable of concurrently using a plurality of links.

### Description of the Related Art

Along with a recent increase in amount of communicated data, communication techniques such as wireless Local Area Network (LAN) have been developed. As a major communication standard of the wireless LAN, the Institute of Electrical and Electronics Engineers (IEEE) 802.11 standard series is known. The IEEE802.11 standard series include standards such as IEEE802.11 a/b/g/n/ac/ax/be.

For example, the IEEE802.11be standard is formulating multi-link communication in which one access point (AP) establishes a plurality of links with one station (STA) using a plurality of different frequencies and performs communication using these links. Note that the plurality of links can be established using frequencies belonging to any one of, for example, the 2.4-GHz band, the 3.6-GHz band, the 4.9-GHz band, the 5-GHz band, and the 6-GHz band. Alternatively, the plurality of links can be established using frequencies belonging to different frequency bands. An AP and an STA supporting multi-link communication are called an AP Multi-Link Device (MLD) and an STAMLD, respectively. Japanese Patent Laid-Open No. 2021-190722 describes a technique of improving the use efficiency of radio resources in multi-link communication.

### SUMMARY OF THE INVENTION

The present invention provides a frequency selection technique for improving performance obtained by using multi-link communication when adding or deleting a link in a system in which multi-link communication is performed.

The present invention in its first aspect provides a communication apparatus as specified in claims 1 to 10.

The present invention in its second aspect provides a control method as specified in claim 11.

The present invention in its third aspect provides a program as specified in claim 12.

Further features of the present invention will become apparent from the following description of embodiments with reference to the attached drawings.

### BRIEF DESCRIPTION OF THE DRAWINGS

Fig. 1 is a view showing an example of the configuration of a wireless communication system;
Fig. 2 is a block diagram showing an example of the hardware arrangement of a communication apparatus;
Fig. 3 is a block diagram showing an example of the functional arrangement of the communication apparatus;
Fig. 4 is a flowchart illustrating an example of a procedure when an AP selects a frequency to be added;
Fig. 5 is a sequence chart showing an example of a sequence between the AP and an STA when the AP notifies the frequency to be added;
Fig. 6 is a view showing an example of the structure of a Beacon frame;
Fig. 7 is a view showing an example of the structure of a Multi-Link element;
Fig. 8A is a view showing an example of the structure of an Action frame;
Fig. 8B is a view showing an example of the structure of an Action frame;
Fig. 8C is a view showing an example of the structure of an Action frame;
Fig. 8D is a view showing an example of the structure of an Action frame;
Fig. 9 is a table showing an example of a correspondence table between a value of a Protected EHT Action field and its meaning;
Fig. 10 is a flowchart illustrating an example of a procedure when an STA selects a frequency used by a link to be added;
Fig. 11 is a sequence chart showing an example of a sequence between an AP and the STA when the STA requests the AP to add a link;
Fig. 12 is a flowchart illustrating an example of a procedure when the AP determines whether it is possible to add the link requested by the STA;
Fig. 13 is a sequence chart showing an example of a sequence between an AP and an STA when the AP recommends the STA to add a link;
Fig. 14 is a flowchart illustrating an example of a procedure when the AP selects a frequency to be used in a case of recommending the STA to add a link;
Fig. 15 is a flowchart illustrating an example of a procedure when an AP selects a frequency the use of which is to be stopped;
Fig. 16 is a flowchart illustrating an example of a procedure when an STA selects a frequency, the use of which is to be stopped, in a case of deleting a link;
Fig. 17 is a flowchart illustrating an example of a procedure when an AP determines whether it is possible to delete the link requested by the STA; and
Fig. 18 is a flowchart illustrating an example of a procedure when an AP selects a frequency, the use of which is to be stopped, in a case of recommending an STA to delete a link.

### DESCRIPTION OF THE EMBODIMENTS

Hereinafter, embodiments will be described in detail with reference to the attached drawings. Note, the following embodiments are not intended to limit the scope of the claimed invention. Multiple features are described in the embodiments, but limitation is not made to an invention that requires all such features, and multiple such features may be combined as appropriate. Each of the embodiments of the present invention described below can be implemented solely or as a combination of a plurality of the embodiments or features thereof where necessary or where the combination of elements or features from individual embodiments in a single embodiment is beneficial. Furthermore, in the attached drawings, the same reference numerals are given to the same or similar configurations, and redundant description thereof is omitted.

### (System Configuration)

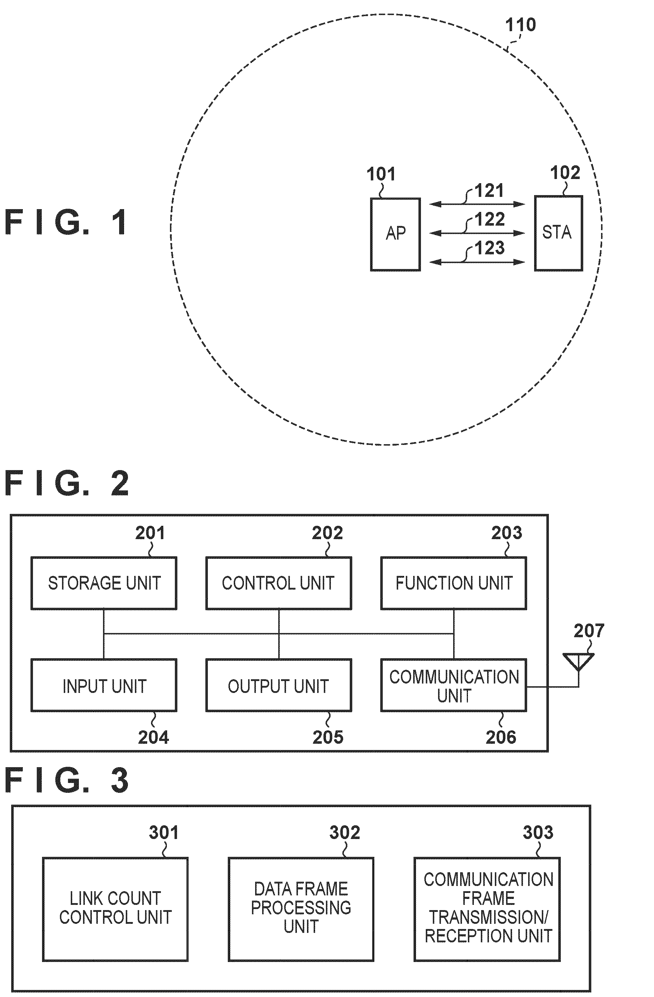

Fig. 1 shows an example of the configuration of a wireless communication system according to this embodiment. This wireless communication system includes, for example, an access point (AP) 101 and a station (STA) 102. The AP 101 forms a wireless network 110. The STA joins the wireless network 110. That is, the wireless network 110 represents a range (communication range) within which the AP 101 can wirelessly communicate with another communication apparatus. In this embodiment, the STA 102 is located within the communication range of the AP 101. The AP 101 and the STA 102 will sometimes be referred to as communication apparatuses 100 without discriminating between them hereinafter. The AP 101 can include a wireless LAN router and a personal computer (PC) but is not limited to these. The STA 102 can include a camera, a tablet, a smartphone, a PC, a portable telephone, and a video camera but is not limited to these. Note that each of the AP 101 and the STA 102 may be an information processing apparatus such as a radio chip that can execute wireless communication complying with the IEEE802.11be standard. The wireless network shown in Fig. 1 is formed by one AP 101 and one STA 102 but the numbers and arrangements of APs 101 and STAs 102 are not limited to these. For example, two or more STAs 102 may be connected to the AP 101 and the number of APs 101 may be two or more.

Each of the AP 101 and the STA 102 is a wireless communication apparatus that can execute wireless communication complying with the IEEE802.11 standard series. The IEEE802.11 standards series can include the IEEE802.11a/b/g/n/ac/ax/be/bn standards. That is, each of the AP 101 and the STA 102 may support at least one of the standards including the IEEE802. 1 The standard. Note that IEEE is an abbreviation for Institute of Electrical and Electronics Engineers. In addition to the IEEE802.11 standards series, each of the AP 101 and the STA 102 may support other communication standards such as Bluetooth^{®}, NFC, UWB, ZigBee, and MBOA. Note that UWB is an abbreviation for Ultra Wide Band, and NMOA is an abbreviation for Multi Band OFDM Alliance. Furthermore, NFC is an abbreviation for Near Field Communication. UWB includes wireless USB, wireless 1394, and WiNET. Each of the AP 101 and the STA 102 may support communication standards of wired communication such as a wired LAN.

The AP 101 and the STA 102 can perform communication using frequencies in the 2.4-GHz band, 3.6-GHz band, 5-GHz band, and 6-GHz band, and the 45-GHz band and 60-GHz band called the millimeter wave bands. The frequency bands used by the AP 101 and the STA 102 are not limited to these. For example, a different frequency band like the Sub-1 GHz band may be used. The AP 101 and the STA 102 can perform communication using bandwidths of 20 MHz, 40 MHz, 80 MHz, 160 MHz, 320 MHz, 540 MHz, 640 MHz, 1080 MHz, and 2160 MHz. The bandwidths used by the AP 101 and the STA 102 are not limited to these, and other bandwidths of, for example, 240 MHz and 4 MHz may be used.

The AP 101 and the STA 102 can execute OFDMA communication complying with the IEEE802.11be standard, thereby implementing Multi-User (MU) communication in which signals of a plurality of users are multiplexed. The multi-user communication can also be called MU communication. OFDMA is an abbreviation for Orthogonal Frequency Division Multiple Access. In the OFDMA communication, a usable frequency band is divided into a plurality of Resource Units (RUs) and allocated to communication between the AP 101 and each STA 102. Since the RUs are allocated not to overlap each other, the AP 101 can simultaneously communicate with the plurality of STAs 102 in the usable frequency band. The AP 101 and the STA 102 can execute Multiple-Input and Multiple-Output (MIMO) communication. In this case, each of the AP 101 and the STA 102 includes a plurality of antennas, and one of the AP 101 and the STA 102 can use the same frequency channel to transmit signals of a plurality of different streams from the respective antennas. Then, the reception-side apparatus simultaneously receives the signals of the plurality of streams using the plurality of antennas, separates the signals of the streams, and decodes them. In this way, the AP 101 and the STA 102 can communicate more data during the same time by executing MIMO communication, as compared with a case where no MIMO communication is executed.

The AP 101 and the STA 102 can execute multi-link communication that is performed by establishing a plurality of links using different frequencies. For example, the STA 102 can establish three links 121 to 123 with the AP 101. Note that the number of multi-links established between the AP 101 and the STA 102 may be two, or four or more. For example, in addition to the links 121 to 123 between the AP 101 and the STA 102, the fourth link may further be established. When, for example, the links 121 to 123 are established between the AP 101 and the STA 102, one or more of the links may be disconnected and multi-link communication may be continued using the remaining one or more links. The AP 101 can notify the STA 102 connected to the self-apparatus of the number of links that can be used concurrently in multi-link communication with the self-apparatus. Furthermore, the AP 101 can notify the STA 102 of frequencies that can be used in multi-link communication with the self-apparatus. That is, the AP 101 and the STA 102 can execute multi-link communication using any one of the frequencies notified from the AP 101 within the range of the number of concurrently usable links, which has been notified from the AP 101. The frequencies used by the links 121 to 123 can be frequencies belonging to the 5-GHz band, the 6-GHz band, and the 2.4-GHz band, respectively. Alternatively, the frequencies used by these links may be frequencies belonging to other frequency bands. For example, as two or three of the links 121 to 123, a plurality of different frequencies included in the same frequency band may be used. In this case, for example, the multi-link may be established by setting the link 121 as channel 36 in the 5-GHz band and the link 122 as channel 161 in the 5-GHz band. Note that in this embodiment, channel is identification information used to identify a specific frequency channel. Note that a plurality of links that use frequencies in the same frequency band and links that use frequencies in frequency bands different from that of the links may be mixed between the AP 101 and the STA 102. For example, the STA 102 may establish, with the AP 101, the link 121 using channel 5 and the link 122 using channel 213 in the 6-GHz band, and further establish, with the AP 101, the link 123 using channel 6 in the 2.4-GHz band. The frequencies used by the links may be frequencies belonging to frequency bands other than the above ones. When the AP 101 establishes a plurality of links of different frequencies with the STA 102, even if one link is congested, the AP 101 can communicate with the STA 102 using another link. Thus, the AP 101 can prevent a significant decrease in throughput and delay in communication with the STA 102.

Each link is assigned with a Link ID as an identifier for identifying the link. The respective links may form different networks. In this case, in the network 110 formed by the AP 101, a network can exist for each link. For example, when the STA 102 joins each of networks in the 5-GHz band, the 6-GHz band, and the 2.4-GHz band formed by the links 121 to 123, the Link IDs = 1, 2, and 3 can be assigned to the links, respectively. In this case, the Link ID can have a function of identifying the link and a function of identifying the network. Note that the values of the Link ID are merely examples, and values other than 1, 2, and 3 may be assigned. In addition, different Link IDs may be assigned to the plurality of STAs 102 that use the same frequency.

When the AP 101 and the STA 102 perform multi-link communication, communication performed in the links may interfere with each other depending on the combination of the frequencies used by the links. For example, if the frequencies used by the links are adjacent to each other, a transmission signal in one link leaks into another link as interference, and thus reception in the other link may fail. To avoid this problem, the IEEE802.11be standard defines an STR operation and an NSTR operation. STR is an abbreviation for Simultaneous Transmit and Receive and NSTR is an abbreviation for Non-simultaneous Transmit and Receive. The combinations of the links forming multi-link communication are classified into combinations (STR link pairs) of links with which the STR operation is possible and combinations (NSTR link pairs) of links with which the STR operation is impossible. In two links as an STR link pair, it is possible to perform transmission/reception and the like in one link independently of operations in the other link. On the other hand, in two links as an NSTR link pair, channel access control in one link can be performed in consideration of occurrence of interference with the other link. For example, even if a transmission right is acquired in one link, transmission processing can be executed in accordance with an operation status in the other link without immediately starting transmission. As an example, even if a transmission right is acquired in one link, an operation of postponing transmission processing until a transmission right is acquired in the other link can be executed. To avoid interference from occurring in the NSTR link pair, control can be executed to adjust transmission start timings and transmission end timings in the links. As described above, a predetermined restriction is imposed on an operation in each of the links constituting the NSTR link pair. Note that if the NSTR link pair is included in the links used in multi-link communication, each of the AP 101 and the STA 102 can notify the partner communication apparatus of the target links using a frame including an NSTR Indication Bitmap subfield. Note that each of the AP 101 and the STA 102 can make a notification of information of the STR operation of the partner apparatus using a Frequency Separation For STR/AP MLD Type Indication subfield. In the Frequency Separation For STR/AP MLD Type Indication subfield, for example, a frequency interval with which the STR operation is possible can be represented by (N - 1) × 80 MHz. That is, if the value of N of the subfield is 2, the frequency interval with which the STR operation is possible is 80 MHz. As described above, with the Frequency Separation For STR/AP MLD Type Indication subfield, a notification of the frequency interval with which the STR operation is possible can be made.

As described above, it is expected to improve throughput and delay by performing multi-link communication between the AP 101 and the STA 102. On the other hand, since it is necessary to operate a plurality of wireless interfaces to perform multi-link communication, the power consumption of each communication apparatus 100 may increase. To suppress an increase in power consumption, it is considered to control the number of usable links in accordance with the communication environment. However, the performance of multi-link communication may degrade depending on selection of a frequency associated with a link to be added when increasing the number of links used concurrently and selection of a link to be deleted when decreasing the number of links. For example, depending on a frequency associated with a link to be added, interference or restriction may be caused in communication in the existing links. In this case, throughput in multi-link communication may not be improved but may degrade due to addition of the link. On the other hand, depending on a frequency associated with a link to be deleted, interference or restriction caused in the existing links may be eliminated, and the performance of multi-link communication such as a communication capacity may largely be influenced.

In consideration of the above situation, in this embodiment, when increasing the number of links used concurrently in multi-link communication, the communication apparatus 100 selects, based on a predetermined condition, a frequency associated with a link to be added from a plurality of candidate frequencies. For example, the AP 101 can increase/decrease the number of links used concurrently in multi-link communication within the range of the number of communication interfaces of the self-apparatus. When increasing the number of links used concurrently in multi-link communication, the AP 101 decides, based on a predetermined condition, a frequency to be added in accordance with an increase in number of links, and notifies the STA 102 of it. On the other hand, the STA 102 can increase/decrease the number of links used concurrently in multi-link communication within the range of the number of communication interfaces of the self-apparatus or within the range of the number of links used concurrently in multi-link communication by the AP 101 to which the self-apparatus is connected. When increasing the number of links used concurrently in multi-link communication, the STA 102 decides, based on a predetermined condition, a frequency used by a link to be added from the usable frequencies notified from the AP 101, and requests the AP 101 to add the link that uses the decided frequency. When decreasing the number of links in multi-link communication, the communication apparatus 100 selects, based on a predetermined condition, a frequency the use of which is to be stopped from the frequencies used in multi-link communication. For example, the AP 101 selects, as a frequency the use of which is to be stopped, a link satisfying the predetermined condition, and notifies the STA 102 of the frequency and deletion of the link that uses the frequency. The STA 102 selects, as a frequency the use of which is to be stopped, a link satisfying the predetermined condition, and requests the AP 101 to delete the link that uses the frequency. Then, the AP 101 and the STA 102 execute multi-link communication using the plurality of links after update. The predetermined condition for selecting the frequency of the link to be added or the frequency of the link the use of which is to be stopped will be described later. For example, the predetermined condition can be set based on the number of apparatuses that use the frequency, whether the STR operation is possible in multi-link communication, a usable frequency bandwidth, a frequency band to which the frequency belongs, or the like. Note that the predetermined conditions may be used individually or in combination. As described above, when increasing/decreasing the number of links used concurrently in multi-link communication, a frequency associated with a link to be added or deleted is selected based on the predetermined condition, thereby making it possible to improve performance obtained by using multi-link communication.

### (Hardware Arrangement of Communication Apparatus)

Fig. 2 shows an example of the hardware arrangement of the communication apparatus 100 (AP 101 and STA 102) according to this embodiment. The communication apparatus 100 includes a storage unit 201, a control unit 202, a function unit 203, an input unit 204, an output unit 205, a communication unit 206, and an antenna 207. The storage unit 201 is formed by one or more memories such as a ROM and a RAM, and stores computer programs for performing various operations to be described later, and various kinds of information such as communication parameters for wireless communication. ROM is an abbreviation for Read Only Memory, and RAM is an abbreviation for Random Access Memory. Note that other than the memories such as a ROM and a RAM, a storage medium such as a flexible disk, a hard disk, an optical disk, a magneto-optical disk, a CD-ROM, a CD-R, a magnetic tape, a nonvolatile memory card, or a DVD may be used as the storage unit 201. The storage unit 201 may include a plurality of memories.

The control unit 202 is formed by, for example, one or more processors such as a CPU and an MPU, and controls the whole communication apparatus 100 by executing the computer programs stored in the storage unit 201. Note that the control unit 202 may control the whole communication apparatus 100 by cooperation of the computer programs stored in the storage unit 201 and an Operating System (OS). In addition, the control unit 202 generates data and signals (radio frames) to be transmitted in communication with another communication apparatus. Note that CPU is an abbreviation for Central Processing Unit and MPU is an abbreviation for Micro Processing Unit. In addition, the control unit 202 may include a plurality of processors such as a multi-core processor, and controls the whole communication apparatus 100 by the plurality of processors.

In addition, the control unit 202 controls the function unit 203 to execute wireless communication and predetermined processing such as image capturing, printing, or projection. The function unit 203 is hardware used by the communication apparatus 100 to execute predetermined processing. If the function unit is a printer, image data acquired via the communication unit 206 is printed. If the function unit is a scanner, image data generated by scanning by the scanner is transmitted to an external apparatus via the communication unit 206. If the function unit is a camera, image data captured by the camera is transmitted to an external apparatus via the communication unit 206.

The input unit 204 accepts various kinds of operations from the user. The input unit 204 is formed by, for example, a touch panel, hardware keys, buttons, and the like. The output unit 205 performs various kinds of outputs to the user via a monitor screen and a loudspeaker. In this example, the output by the output unit 205 includes display on the monitor screen, audio output by the loudspeaker, and vibration output. Note that both the input unit 204 and the output unit 205 may be implemented by one module, like a touch panel. Furthermore, each of the input unit 204 and the output unit 205 may be integrated with the communication apparatus 100, or may be a separate body.

The communication unit 206 controls wireless communication complying with the IEEE802.11be standard. In addition to the IEEE802. 11be standard, the communication unit 206 may control wireless communication complying with another IEEE802.11 standard series or control wired communication by a wired LAN or the like. The communication unit 206 controls the antenna 207 to transmit/receive signals for wireless communication generated by the control unit 202. Note that if the communication apparatus 100 supports the NFC standard or Bluetooth standard in addition to the IEEE802.11 standard series, it may control wireless communication complying with these communication standards. If the communication apparatus 100 can execute wireless communication complying with a plurality of communication standards, it may individually include the communication units 206 and the antennas 207 supporting the respective communication standards. The AP 101 communicates data such as image data, document data, or video data with the STA 102 via the communication unit 206. Note that the antenna 207 may be formed separately from the communication unit 206 or may be formed as one module combined with the communication unit 206.

The antenna 207 is an antenna configured to allow communication in the 2.4-GHz band, the 5-GHz band, the 6-GHz band, and the like. Fig. 2 shows an example in which the communication apparatus 100 includes one antenna but the communication apparatus 100 may include two or more antennas. Alternatively, the communication apparatus 100 may include antennas different for the respective frequency bands. If the communication apparatus 100 includes a plurality of antennas, it may include the communication units 206 respectively corresponding to the antennas.

### (Functional Arrangement of Communication Apparatus)

Fig. 3 is a block diagram showing the functional arrangement of the communication apparatus 100 (AP 101 and STA 102) according to this embodiment. This functional arrangement can be implemented when, for example, one or more processors of the control unit 202 execute the programs stored in one or more memories of the storage unit 201. The communication apparatus 100 can include a link count control unit 301, a data frame processing unit 302, and a communication frame transmission/reception unit 303. The link count control unit 301 controls the number of links used concurrently in multi-link communication between the AP 101 and the STA 102. For example, the link count control unit 301 specifies the number of links used concurrently, based on pieces of information of the presence/absence, amount, frequency, and the like of data frames generated between the AP 101 and the STA 102. These pieces of information can be measured from a statistic generated by processing of the data frame processing unit 302 and the like. When increasing the number of links, the link count control unit 301 selects a frequency corresponding to a link to be added, and notifies the partner communication apparatus of it via the communication frame transmission/reception unit 303. When decreasing the number of links, the link count control unit 301 selects a frequency the use of which is to be stopped, and notifies the partner communication apparatus of it via the communication frame transmission/reception unit 303. The link count control unit 301 selects, based on a predetermined condition, a frequency to be usable in multi-link communication or a frequency the use of which is to be stopped. Determination of whether the candidate frequency satisfies the predetermined condition can be executed based on, for example, information acquired by the data frame processing unit 302 or the communication frame transmission/reception unit 303 from the partner communication apparatus, a statistic generated by the processing, and the like. The data frame processing unit 302 generates a data frame to be transmitted, and processes a received data frame. In a case where the communication apparatus 100 is the transmission source of data, the data frame processing unit 302 generates a data frame. In a case where the communication apparatus 100 is the destination of data, the data frame processing unit 302 processes a received data frame. The communication frame transmission/reception unit 303 transmits/receives a frame to/from the partner communication apparatus. For example, the communication frame transmission/reception unit 303 can execute transmission/reception of a data frame, a management frame, a control frame, and the like using a plurality of links corresponding to a plurality of frequencies. As an example, the communication frame transmission/reception unit 303 transmits/receives control frames such as a Trigger frame, a Request To Send (RTS) frame, and a Clear To Send (CTS) frame. In addition, the communication frame transmission/reception unit 303 transmits/receives management frames such as a Beacon frame, an Association frame, an Action frame, and a Block ACK (BA) frame. Note that the communication frame transmission/reception unit 303 detects interference and the like from another apparatus at a frequency used in communication, and generates statistic information.

### (Procedure of Processing)

The above-described operation procedure by the AP 101 and the STA 102, the sequence between the AP 101 and the STA 102, and the like will be described using some embodiments.

### (First Embodiment)

In this embodiment, a description will be made using an operation example in a case where an AP 101 increases the number of links used concurrently in multi-link communication. First, assume that the AP 101 sets three frequencies as frequencies usable in multi-link communication in a network 110 formed by the self-apparatus. In this embodiment, these frequencies will be referred to as existing usable frequencies hereinafter. That is, when establishing links with an STA 102, the AP 101 selects one or more of the three frequencies, and establishes links using the selected one or more frequencies. In this case, the upper limit of the number of links usable by the AP 101 in multi-link communication can be three. Then, in addition to the three existing usable frequencies, the AP 101 selects the fourth frequency as a frequency usable in multi-link communication with the self-apparatus. At this time, the AP 101 selects the fourth frequency based on a predetermined condition. Examples of the predetermined condition for the AP 101 to select the fourth frequency will be described below.

The AP 101 can use, as the predetermined condition, a condition associated with the STR operation. For example, the AP 101 may select a frequency that can be used to execute the STR operation with links using each of the existing usable frequencies. As described above, a predetermined restriction can be imposed on an operation in each of links constituting an NSTR link pair. For example, a combination of a link that uses the fourth frequency and the link that uses any one of the existing usable frequencies is an NSTR link pair with which the STR operation is impossible. In this case, one of the links serves as a Primary Link as a representative link, and such restriction can be imposed that data transmission can be performed only in a status in which transmission using the Primary Link is possible. As described above, in a case where the STR operation is impossible, data transmission using a Non-primary Link is restricted, and thus data transmission is delayed or throughput is not improved. When the AP 101 adds the fourth frequency with which the STR operation can be executed with respect to the links that use the existing usable frequencies, it is possible to perform data transmission/reception to/from the STA 102 without imposing any restriction between the links. This can obtain the effect of, for example, reducing the delay of data transmission or improving the throughput in accordance with the addition of the link. For example, the AP 101 measures, in advance, interference power between the frequencies usable by the communication interfaces of the self-apparatus, and stores combinations of frequencies for which the measured interference power is smaller than a predetermined threshold (with which the STR operation is possible). Then, when adding a frequency, the AP 101 specifies, based on the combination, a frequency that can be used to execute the STR operation with links using each of the existing usable frequencies. The interference power between the frequencies can be measured by the reception power of a signal received at the other frequency when a transmission signal is output at one frequency. In general, the interference power between the frequencies is smaller as a frequency interval is larger. Therefore, in a case where a frequency at which the interference power is smaller than the predetermined threshold with respect to the frequency used by the given existing link is specified, a frequency having a frequency interval larger than that of the frequency can be a frequency usable with the existing link to execute the STR operation. In a case where the AP 101 uses, as the predetermined condition, a condition associated with the STR operation, a condition associated with the STR operation in the AP 101 or a condition associated with the STR operation in the STA 102 connected to the self-apparatus may be used. If a plurality of STAs 102 are connected to the AP 101, a frequency that satisfies the predetermined condition for all the STAs 102 may be selected, or a frequency that satisfies the predetermined condition for some of the STAs 102 may be selected. For example, if there is no frequency with which the STR operation is possible in all the STAs 102, a frequency with which the STR operation is possible in as many STAs 102 as possible may be selected. The predetermined condition associated with the STR operation may be used in combination with another condition. If there exist a plurality of candidate frequencies, a frequency that satisfies the predetermined condition associated with the STR operation is preferentially selected.

In addition, the AP 101 can select a frequency to be added, so as to increase the number of STR link pairs in the STA 102. For example, the AP 101 can select a frequency to dissolve an NSTR link pair in the STA 102. When the AP 101 receives a frame including an NSTR Indication Bitmap field from the STA 102, it can acquire NSTR link pair information in the STA 102. In a case where there exists an NSTR link pair in the STA 102, the AP 101 can select a frequency whose frequency interval from each of the frequencies used by the links exceeds a predetermined threshold. For example, the predetermined threshold can be a frequency interval necessary for the STA 102 to execute the STR operation. For example, the AP 101 adds, as the fourth frequency, a frequency whose frequency interval from the frequency of one of the links of the NSTR link pair exceeds the predetermined threshold. Then, the STA 102 adds a link that uses the fourth frequency, and deletes one of the links included in the NSTR link pair. This dissolves the NSTR link pair in the STA 102, and increases the number of STR link pairs. Furthermore, based on the NSTR link pair information acquired from the STA 102, the AP 101 can recognize a condition under which an NSTR link pair is generated in the STA 102. For example, based on the frequency interval between the frequencies used by the NSTR link pair, the AP 101 can estimate a frequency interval by which an NSTR link pair is generated. For example, the AP 101 stores the frequency interval of the NSTR link pair acquired from the STA 102, and can then select, when adding a new frequency, a frequency whose frequency interval from each existing usable frequency is equal to or larger than the stored frequency interval. The thus specified frequency interval can be used for another predetermined condition. Note that the AP 101 can acquire the frequency interval with which the STR operation is possible, using a Frequency Separation For STR/AP MLD Type Indication subfield. When adding a new frequency, the AP 101 can select a frequency whose frequency interval from each existing usable frequency is equal to or larger than the frequency interval. Both the NSTR Indication Bitmap field and the Frequency Separation For STR/AP MLD Type Indication subfield may be used.

The AP 101 can use, as the predetermined condition, a condition associated with a usable frequency bandwidth at the candidate frequency. For example, since a transmittable/receivable communication amount becomes relatively large by selecting a frequency whose bandwidth usable for communication is wide, the AP 101 can improve the effect of increasing the number of links used concurrently in multi-link communication. For example, candidate frequencies to be added as the fourth frequency by the AP 101 are channel 36 in the 5-GHz band and channel 5 in the 6-GHz band, which can use bandwidths of 80 MHz and 320 MHz, respectively. In this case, the AP 101 can compare the bandwidths usable by the frequencies with each other, and select channel 5 in the 6-GHz band that can use a wider bandwidth of 320 MHz. As an example, the AP 101 stores a table that associates, with each other, a frequency usable by each of the communication interfaces of the self-apparatus and a bandwidth usable by the frequency. Then, if there exist a plurality of candidate frequencies, the AP 101 can select a frequency whose usable bandwidth is wide with reference to the table. Note that the AP 101 can select a frequency after adding, to the table created in advance, additional information corresponding to the operating status of the network. For example, the additional information can indicate that, for example, some frequencies cannot be used due to detection of a radar or the like. The additional information can be frequencies, some of which overlap the frequencies used by the existing links used by the AP 101. In a case where there exist a plurality of candidate frequencies, the AP 101 can select a frequency whose usable frequency bandwidth is widest. In addition, in a case where there exist a plurality of frequencies whose usable frequency bandwidths are widest, the AP 101 can select one frequency from them based on a random number or the like. The AP 101 can sequentially select a predetermined number of frequencies from a frequency whose usable frequency bandwidth is widest, and select one frequency from them using a random number or another condition. Alternatively, the AP 101 can set a predetermined threshold concerning a usable frequency bandwidth, and select one frequency from frequencies that can use frequency bandwidths equal to or larger than the threshold.

The AP 101 can use, as the predetermined condition, a condition associated with a frequency band to which a candidate frequency belongs. For example, the AP 101 can select a frequency belonging to a specific frequency band. As an example, in a case where there exist a plurality of candidate frequencies and they belong to different frequency bands, the AP 101 can select one frequency from frequencies belonging to the 6-GHz band. In general, by using a frequency belonging to the 6-GHz band, it is possible to highly probably perform communication at a high communication speed, as compared with frequencies belonging to other frequency bands. In addition, if the product model and standard (IEEE802.11ax and the like) supporting the 6-GHz band are limited, the number of communication apparatuses that use the same frequency is small, and higher throughput and low delay are highly probably obtained. Furthermore, if the communication apparatus that implements the legacy standard cannot use the 6-GHz band, only Modulation and Coding Scheme (MCS) that implements a high frame rate is used in the 6-GHz band. As a result, since the time during which each communication apparatus occupies the frequency is short and congestion of traffic is suppressed, it becomes easy to acquire a transmission right in communication between the AP 101 and the STA 102, and delay can be reduced. On the other hand, in a case where there exist a plurality of candidate frequencies, the AP 101 can select one of frequencies belonging to the 2.4-GHz band. As compared with the remaining frequency bands, in the 2.4-GHz band, the number of communication apparatuses supporting the 2.4-GHz band is large and interconnectivity is high. Therefore, by selecting a frequency belonging to the 2.4-GHz band, the AP 101 can accommodate more communication terminals. In addition, as compared with the remaining frequency bands, in the 2.4-GHz band, a range within which radio waves reach is wide, and thus the network 110 formed by the AP 101 can cover a wider range. On the other hand, in a case where there exist a plurality of candidate frequencies, the AP 101 can select one of frequencies belonging to the 5-GHz band. In the 5-GHz band, since interference is less than in the 2.4-GHz band also used for general home appliances, apparatuses implementing Bluetooth, and the like, and the number of communication terminals is larger than in the 6-GHz band, the 5-GHz band is a frequency band having the advantages of the 2.4-GHz band and the 6-GHz band. Therefore, by selecting a frequency belonging to the 5-GHz band, it is possible to accommodate a number of communication apparatuses and to perform communication with high communication quality. The AP 101 can set a priority order for the frequency bands usable by the communication interfaces of the self-apparatus, and perform selection in accordance with the priority order based on frequency bands to which the respective candidate frequencies belong. For example, if there are frequencies belonging to the frequency band having the highest priority level in the candidate frequencies, the AP 101 can select one frequency from them. Note that if there exist a plurality of frequencies belonging to a frequency band having a high priority level, the AP 101 can select one frequency from them based on a random number or the like. Alternatively, the AP 101 can sequentially select a predetermined number of frequencies from frequencies belonging to a frequency band having a high priority level, and then select, for example, one frequency from them using a random number or another condition.

The AP 101 can use, as the predetermined condition, a condition associated with a combination with the existing usable frequency. For example, the AP 101 can select a frequency belonging to a frequency band different from the frequency bands to which the existing usable frequencies respectively belong. For example, in a case where the existing usable frequencies include two frequencies belonging to the 5-GHz band and one frequency belonging to the 6-GHz band, the AP 101 can select a frequency belonging to the 2.4-GHz band. In a case where there exist a plurality of candidate frequencies in the same frequency band as that to which the existing usable frequency belongs, the AP 101 can select a frequency whose frequency interval from the existing usable frequency is largest. For example, assume that one frequency belonging to each of the 2.4-GHz band, the 5-GHz band, and the 6-GHz band is used in each of the existing links of the AP 101, and each candidate frequency is a frequency belonging to any one of these frequency bands. In this case, the AP 101 can select a frequency whose minimum frequency interval from each of the existing usable frequencies is largest. By selecting frequency separated from the existing usable frequencies, interference power generated between the links can be suppressed. Note that in a case where there exist a plurality of candidate frequencies, the AP 101 can select one frequency from frequencies whose frequency intervals from each of the existing usable frequencies are larger than a predetermined threshold. For example, the AP 101 may select one frequency from the frequencies based on a random number or the like. Alternatively, the AP 101 can sequentially select a predetermined number of frequencies from the frequency whose minimum frequency interval from each of the existing usable frequencies is largest, and select one frequency from them based on a random number or the like. On the other hand, the AP 101 may select the same frequency as that used by another AP. For example, in a case where the AP 101 can execute cooperative transmission or the like, the AP 101 can select a frequency used by an AP as the cooperation partner of cooperative transmission. Cooperative transmission is a transmission method in which a plurality of APs cooperatively perform transmission, and can include, for example, transmission of the same signal from a plurality of APs to one STA and performing beamforming so that a plurality of APs reduce interference between them. When the AP 101 selects a frequency used by another AP, it becomes possible to perform cooperative transmission, and throughput and communication quality between the AP 101 and the STA 102 can be improved.

The AP 101 can use, as the predetermined condition, a condition associated with a specific frequency. For example, the AP 101 may select a frequency other than the specific frequency. In general, the 5-GHz band is a frequency band in which radio waves of a weather radar, a military radar, and the like can be transmitted. Therefore, a communication apparatus that uses the 5-GHz band needs to implement a Dynamic Frequency Selection (DFS) function of changing a frequency to another frequency when a radar or the like is detected. In consideration of this, the AP 101 can select a frequency other than a frequency that needs the DFS function. Thus, it is unnecessary to execute the DFS function at the added frequency, and it is possible to avoid change of the frequency when a radar or the like is detected. Alternatively, the AP 101 can select a frequency other than a Preferred Scanning Channel (PSC) in the 6-GHz band and channel 6 in the 2.4-GHz band. The PSC in the 6-GHz band and channel 6 in the 2.4-GHz band are channels that are preferentially selected when the STA searches for an AP, and thus many communication terminals highly probably perform communication at these frequencies, as compared with other frequencies. The AP 101 selects a frequency other than the PSC, thereby making it possible to add a frequency at which a transmission opportunity is readily obtained. On the other hand, the AP 101 may select the specific frequency as a frequency to be added. For example, the AP 101 can select a frequency that needs the DFS function. In a case where another AP selects another frequency to avoid execution of the DFS function, the frequency that needs the DFS function can be a frequency at which the number of communication terminals is relatively small. This allows the AP 101 to add a link in which a transmission opportunity is readily obtained. The AP 101 can select a frequency included in the PSC in the 6-GHz band or channel 6 in the 2.4-GHz band. By selecting these frequencies, the AP 101 can readily be found from the STA 102, and thus connectivity is improved. If a plurality of candidate frequencies remain as a result of selecting a frequency using another condition, the AP 101 can select a specific frequency or a frequency other than the specific frequency from the candidate frequencies. Alternatively, the AP 101 can select a specific frequency, or one frequency from frequencies other than the specific frequency using another condition.

The AP 101 can use, as the predetermined condition, a condition associated with interference. For example, the AP 101 can select a frequency with low interference from candidate frequencies. When the AP 101 selects a frequency with a small interference amount as a frequency used for a link to be added, the possibility that the AP 101 and the STA 102 can acquire a transmission right becomes high, and thus it is possible to add a link in which high throughput is actually obtained. For example, the AP 101 can scan each frequency using the antenna of the self-apparatus, and select a frequency with low interference. Low interference can indicate, for example, the ratio per unit time of a time during which radio waves of reception power exceeding a predetermined threshold are received by the antenna of the AP 101. For example, the AP 101 can measure the number of Beacon frames or FILS Discovery frames received per unit time, and select a channel in which the number of received frames is smallest. The AP 101 may select a channel in which the number of frames received per unit time or the total number of Network Allocation Vectors (NAVs) set for the frequency is smallest. The AP 101 may set, as a measurement target, a frame whose reception intensity exceeds a predetermined threshold, among the received frames. Note that to grasp interference, the AP 101 can acquire associated information from the STA 102. For example, the AP 101 causes the STA 102 to scan each frequency and report received information to the AP 101. As an example, the AP 101 can transmit a Beacon Report Request to the STA 102, and receive a Beacon Report as a response. The Beacon Report can include information of another AP received at each frequency that has been scanned by the STA 102. Thus, the AP 101 can select a frequency to be added, after grasping the congestion status of each frequency on the periphery of the AP 101 and the STA 102. The AP 101 can select a frequency based on the number of other APs using the scanned frequency or the number of other APs using a frequency close to the frequency. As an example, the AP 101 sets a weight coefficient for the number of APs for each frequency. For example, a coefficient X is set for the number of APs that use the same frequency as the target frequency. In addition, a coefficient Y is set for the number of APs that use a frequency that is a frequency different from the target frequency and is within 20 MHz from the target frequency, and a coefficient Z is set for the number of APs that use a frequency within the range of 20 MHz (inclusive) to 40 MHz (inclusive) from the target frequency. For example, X = 4, Y = 2, and Z = 1 may be set. These numbers can be arbitrary values that satisfy a relationship of X > Y > Z. Then, the AP 101 can calculate the sum of these values, and select one frequency from frequencies for which the sum is equal to or smaller than a predetermined threshold. As described above, when the AP 101 selects, based on the information acquired by the self-apparatus or the information received from the STA 102, a frequency to be added, it is possible to add, in consideration of the communication status on the periphery of the AP 101 and the STA 102, a frequency with which performance of multi-link communication is achieved. Note that in a case where there exist a plurality of candidate frequencies whose interference amounts are smaller than the predetermined threshold, the AP 101 may select one frequency from them based on a random number or the like. Alternatively, the AP 101 can sequentially select a predetermined number of frequencies from a frequency with the smallest interference amount or lowest intensity, and select one frequency from them based on a random number, another condition, or the like.

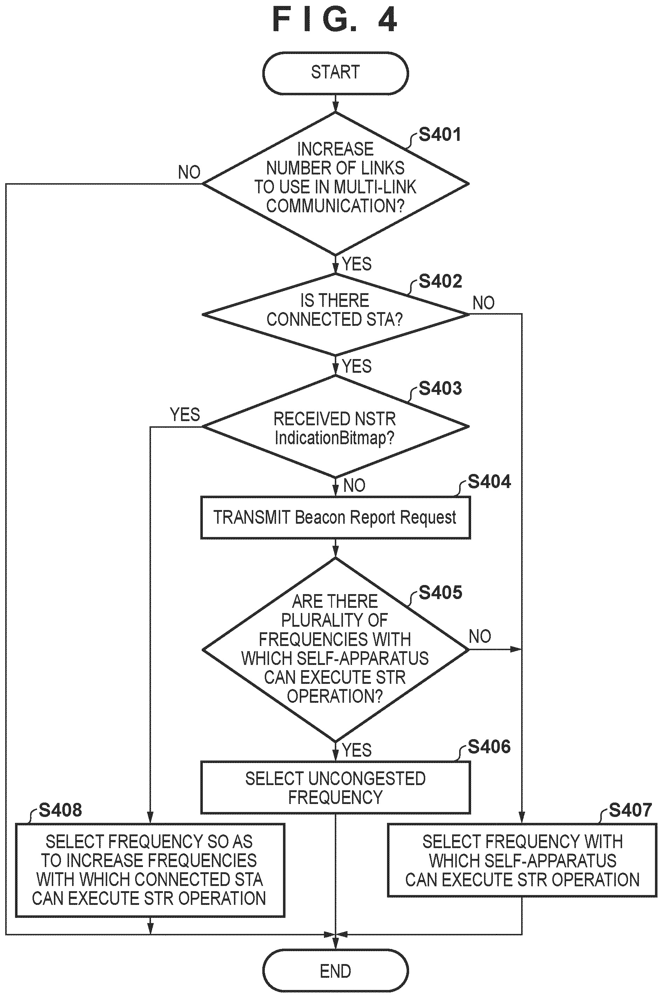

Fig. 4 shows an example of a flowchart when the AP 101 increases the number of links used concurrently in multi-link communication with the self-apparatus and selects a frequency used by a link to be added according to this embodiment. As described above, in this flowchart, assume that the AP 101 sets three frequencies as frequencies usable in multi-link communication with the self-apparatus. Then, the AP 101 determines whether to increase the number of links used (step S401), and selects a frequency used by the link. For example, the AP 101 may execute the determination processing at the start of an operation as an AP, or may periodically execute the determination processing. In a case where a communication traffic amount processed by the self-apparatus increases, the AP 101 may execute the determination processing. For example, in a case where a communication frequency or a communication amount with the STA 102 exceeds a threshold (the amount of communicated data or the number of data packets exceeds a predetermined threshold), a case where the number of connected STAs exceeds a threshold, or the like, the AP 101 can determine to increase the number of links used. In a case where the AP 101 accepts, at the input of a setting change by the user, an instruction to increase the number of links used, the AP 101 can determine to increase the number of links used. In a case where the self-apparatus is connected to a power supply, or a case where a remaining battery amount is equal to or larger than a predetermined threshold, the AP 101 can determine to increase the number of links used. Furthermore, in a case where a specific kind of data such as print data or image (photo, moving image, or the like) data is communicated in communication between the AP 101 and the STA 102, or a case where data of a specific application is communicated, the AP 101 can determine to increase the number of links used. Note that in a case where the AP 101 detects that traffic is congested at a frequency used in multi-link communication, the AP 101 can determine to increase the number of links used. For example, the AP 101 can detect, at a frequency used in multi-link communication, that traffic is congested based on a fact that the number of Beacon frames received from another AP, the ratio of a period in which the frequency is busy, or the like exceeds a predetermined threshold.

If the AP 101 determines to increase the number of links used (YES in step S401), the AP 101 determines whether there exists a connected STA (step S402). If there is no connected STA (NO in step S402), the AP 101 selects one of frequencies usable by the self-apparatus to execute the STR operation, with respect to the existing usable frequency (step S407). For example, the AP 101 can select, as candidate frequencies, frequencies whose frequency intervals from each of the existing usable frequencies are equal to or larger than a predetermined frequency interval, with which the STR operation is possible. Then, the AP 101 can select, from the candidate frequencies, one of frequencies satisfying the above-described condition, such as a frequency whose bandwidth usable in communication is wide, a frequency belonging to a specific frequency band, a frequency belonging to a frequency band that is different from or the same as the frequency band to which each of the existing usable frequencies belongs.

On the other hand, if there exists a connected STA (YES in step S402), the AP 101 can select a frequency to be added, based on information acquired from the STA 102. For example, if the AP 101 receives a frame including an NSTR Indication Bitmap field from the STA 102 (YES in step S403), the AP 101 can select a frequency so as to increase the number of STR link pairs in the STA 102 (step S408). Alternatively, if the AP 101 does not receive a frame including an NSTR Indication Bitmap field from the STA 102 (NO in step S403), the AP 101 can request the STA 102 to measure the surrounding radio environment (step S404). For example, the AP 101 can transmit a Beacon Report Request to the STA 102. Upon receiving a Beacon Report from the STA 102, the AP 101 can select a better frequency by including the result of a scan of each frequency executed by the self-apparatus. For example, the AP 101 determines whether there exist a plurality of frequencies with which the self-apparatus can execute the STR operation, with respect to the existing usable frequencies (step S405). If there exist a plurality of frequencies with which the STR operation is possible (YES in step S405), the AP 101 selects one frequency from them (step S406). For example, the AP 101 can select an uncongested (for example, low-interference) frequency from the frequencies with which the self-apparatus can execute the STR operation. If there is only one frequency with which the STR operation is possible (NO in step S405), the AP 101 selects the frequency (step S407). Note that if there is no frequency with which the STR operation is possible, the AP 101 may advance the process to step S406. Note that a method of selecting a frequency by the AP 101 in a case where there exist a plurality of candidate frequencies is not limited to the above-described one. For example, the AP 101 may select a frequency using the above-described methods in combination. For example, the AP 101 can select a frequency using another method without determining whether the STR operation can be executed using the frequency with the existing usable frequency. The AP 101 can select a frequency using another method regardless of the presence/absence of a connected STA. That is, the AP 101 can select a frequency using the above-described arbitrary predetermined conditions individually or in combination.

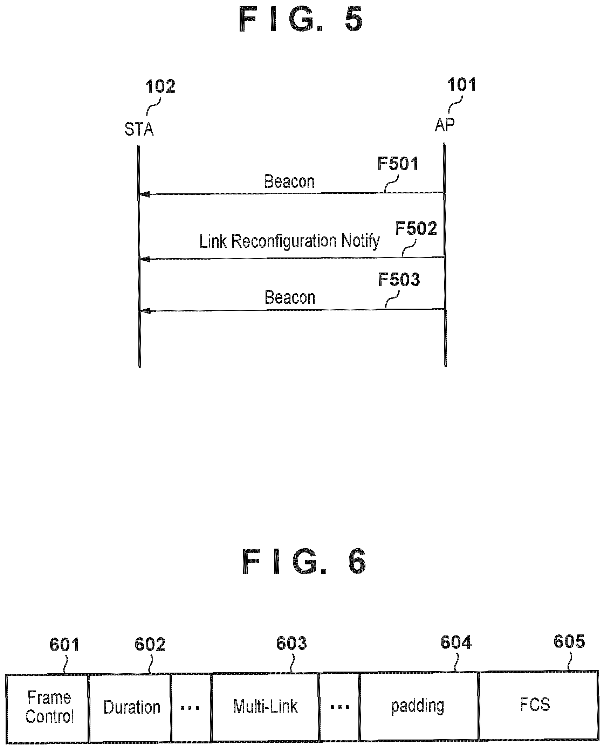

Fig. 5 shows an example of a communication sequence with the STA 102 when the AP 101 increases the number of links used concurrently in multi-link communication according to this embodiment. In this example, the AP 101 increases the number of links during multi-link communication, and notifies the STA 102 of it. Assume first that links 121 to 123 are established between the AP 101 and the STA 102. Assume also that Link IDs assigned to the links 121 to 123 are 1 to 3, respectively. By using a Beacon, the AP 101 notifies link information including frequencies usable in multi-link communication with the self-apparatus (F501). For example, the AP 101 notifies that the Link ID = 1 to 3 can be used, a frequency used by each link, and the like using a Multi-Link element included in the Beacon (or Probe Response). Then, the AP 101 selects, between F501 and F502, a frequency used by a link to be added, and notifies information of the added frequency (F502). For example, the AP 101 can report information of the added frequency using a Link Reconfiguration Notify frame. The Link Reconfiguration Notify frame can be an Action frame. That is, the AP 101 can notify, using the Link Reconfiguration Notify frame, the STA 102 of information indicating that the number of links usable in multi-link communication is increased and information for specifying the added frequency. The AP 101 can include the information of the added frequency in a succeeding Beacon, and transmit it (F503). For example, the AP 101 can transmit the information of the added frequency using a Multi-Link element included in the Beacon (or Probe Response). Note that this sequence is merely an example. For example, the Link Reconfiguration Notify frame may be omitted or another frame may be included.

Fig. 6 shows an example of the structure of the Beacon according to this embodiment. The Beacon includes a Frame Control field 601, a Duration field 602, a Multi-Link element 603, a Padding field 604, and an FCS field 605. The Frame Control field 601 includes information concerning frame control. For example, the Frame Control field 601 includes information of a frame type, subtype, and the like. The Duration field 602 indicates, for example, the estimated values of a time necessary to transmit this frame and a time necessary for a response and a frame interval. The Multi-Link element 603 includes information about multi-link communication, that includes information of links in multi-link communication with the AP 101. The Padding field 604 includes padding data. The FCS field 605 is a frame check sequence, and stores a Cyclic Redundancy Check (CRC) for verifying whether the frame is successfully received.

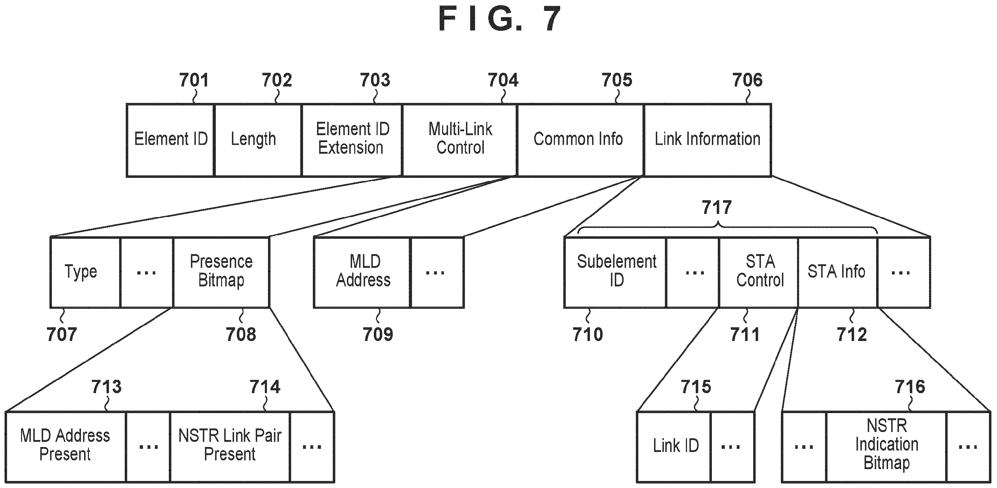

Fig. 7 shows an example of the structure of the Multi-Link element 603. The Multi-Link element 603 includes an Element ID field 701, a Length field 702, and an Element ID Extension field 703. Furthermore, the Multi-Link element 603 can include a Multi-Link Control field 704, a Common Info field 705, and a Link Information field 706. The Element ID field 701 and the Element ID Extension field 703 store values of 255 and 107, respectively, and indicate that this element is a Multi-Link element.

The Multi-Link Control field 704 includes a Type subfield 707 and a Presence Bitmap subfield 708. The Type subfield 707 indicates the type of the Multi-Link element. In a case of, for example, a Basic Multi-Link element, the Type subfield 707 stores a value of 0. The Presence Bitmap subfield 708 indicates the presence/absence of each field included in the Multi-Link element 603. The Presence Bitmap subfield 708 can include an MLD Address Present subfield 713 and an NSTR Link Pair Present subfield 714. In a case where the MLD Address Present subfield 713 stores 1, this indicates that the Common Info field 705 includes an MLD Address field 709. In a case where the MLD Address Present subfield 713 stores 0, the Common Info field 705 does not include the MLD Address field 709. In a case where the NSTR Link Pair Present subfield 714 stores 1, this indicates that the Link Information field 706 includes an NSTR Indication Bitmap subfield 716. In a case where the NSTR Link Pair Present subfield 714 stores 0, the Link Information field 706 does not include the NSTR Indication Bitmap subfield 716. The Common Info field 705 includes the MLD Address field 709. The MLD Address field 709 stores a MAC Address assigned to the AP MLD.

The Multi-Link element 603 included in the Beacon or Probe Response can be called a Basic Multi-Link element. The Link Information field 706 in the Basic Multi-Link element includes information for each link used by the AP 101 in multi-link communication. The Link Information field 706 includes Per-STA Profile subelements 717 the number of which corresponds to the number of links used by the AP 101 in multi-link communication. The Per-STA Profile subelement 717 includes a Subelement ID subfield 710, an STA Control subfield 711, and an STA Info subfield 712. The Subelement ID subfield 710 indicates the type of a Link Info field, and stores a value of 0 for, for example, a Per-STA Profile subfield. The STA Control subfield 711 includes a Link ID subfield 715. The Link ID subfield 715 stores the Link ID of a link associated with the Per-STA Profile subelement 717. For example, values of 1 to 3 can be stored as the Link IDs corresponding to the links 121 to 123, respectively.

The STA Info subfield 712 includes the NSTR Indication Bitmap subfield 716. The NSTR Indication Bitmap subfield 716 indicates a combination (NSTR link pair) of NSTR links. Assume, for example, that the link 121 (Link ID = 1) and the link 122 (Link ID = 2) constitute an NSTR link pair. In this case, the second bit of the NSTR Indication Bitmap subfield 716 included in the Link Information field 706 in which the value of the Link ID subfield 715 is 1 is 1. That is, the second bit of the NSTR Indication Bitmap subfield 716 is set to 1, thereby indicating an NSTR link pair with the link of the Link ID = 2. On the other hand, the first bit of the NSTR Indication Bitmap subfield 716 included in the Link Information field 706 in which the Link ID subfield 715 stores a value of 2 is 1. That is, the first bit of the NSTR Indication Bitmap subfield 716 is set to 1, thereby indicating an NSTR link pair with the link of the Link ID = 1. As described above, when the Per-STA Profile subelement 717 indicated individually for each link represents a link as the partner of the NSTR link pair, a specific combination of links in which transmission/reception cannot be performed concurrently can be indicated to the STA 102.

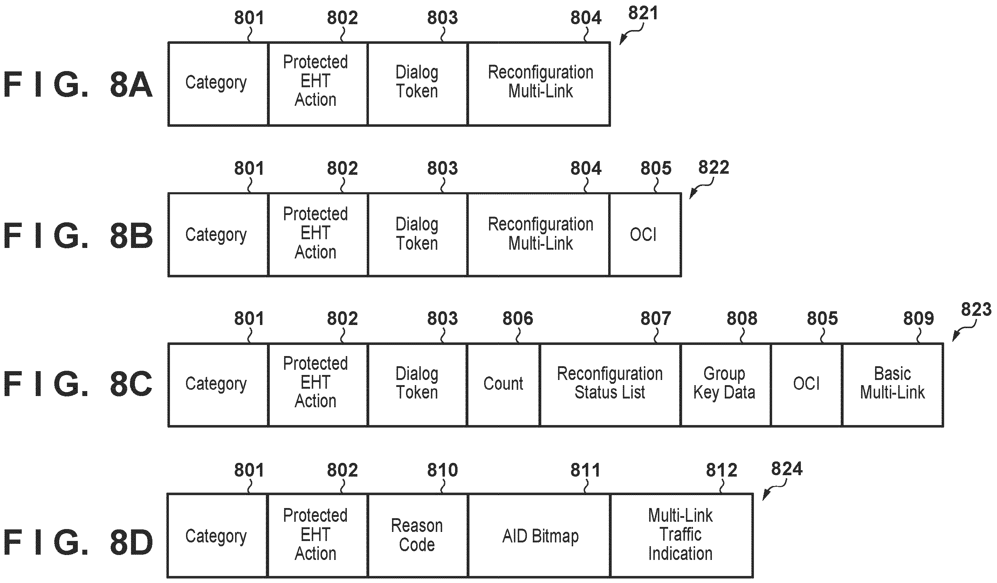

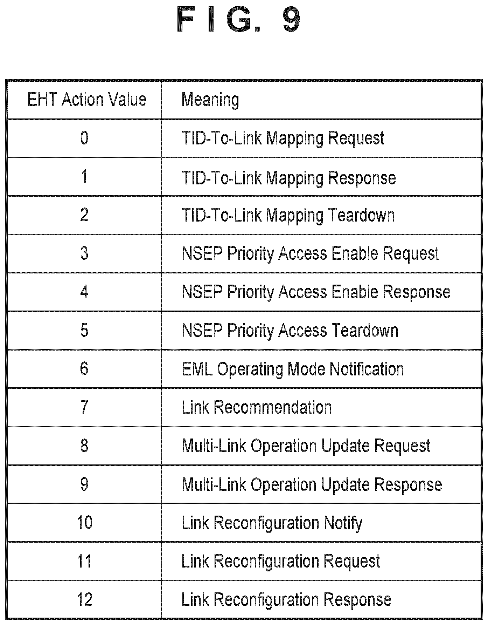

Fig. 8A shows an example of the structure of a Link Reconfiguration Notify frame 821 according to this embodiment. The Link Reconfiguration Notify frame 821 includes a Category field 801, a Protected EHT Action field 802, and a Dialog Token field 803. The Link Reconfiguration Notify frame 821 can include a Reconfiguration Multi-Link field 804. The Category field 801 indicates the type of the frame. For example, when a value of 37 is stored in the Category field 801, it is indicated that the type of the frame is a Protected EHT Action frame. The Protected EHT Action field 802 indicates the type of the frame in the Protected EHT Action frame. Fig. 9 is a table showing the correspondence between a value that can be included in the Protected EHT Action field 802 and its meaning. For example, when the value of the Protected EHT Action field 802 is 10, it is indicated that this frame is a Link Reconfiguration Notify frame. The Dialog Token field 803 is an identifier for identifying a series of message requests and responses.

The Reconfiguration Multi-Link field 804 is a variant of the Basic Multi-Link element 603 shown in Fig. 7. The Reconfiguration Multi-Link field 804 does not include the NSTR Link Pair Present subfield 714 and the NSTR Indication Bitmap subfield 716. On the other hand, the Reconfiguration Multi-Link element includes an Operation Update type subfield in the STA Control subfield 711. The Operation Update type subfield stores a value concerning a change of the state of the link. In a case where the value of the Operation Update type subfield is 0, it is indicated that the AP is removed. Removing the AP can be stopping one of a plurality of AP functions each of which corresponds to each of the plurality of links in multi-link communication of the AP 101 and executes an operation as an AP in the link. In a case where the value of the Operation Update type subfield is 1, it is indicated that the parameter of the link is updated. In a case where the value of the Operation Update type subfield is 2, it is indicated that a link is added. A fact that a link is added can be a fact that the number of links used by the AP 101 in multi-link communication increases and a frequency corresponding to the added link is added. In a case where the value of the Operation Update type subfield is 3, it is indicated that a link is deleted. A fact that a link is deleted can be a fact that the number of links used by the AP 101 in multi-link communication decreases and the use of the corresponding frequency is stopped. In this embodiment, since the AP 101 increases the number of links used in multi-link communication and adds the fourth frequency, the value of the Operation Update type subfield is 2. An Action frame including the Reconfiguration Multi-Link element storing the Operation Update type subfield is transmitted.

As described above, according to this embodiment, the AP 101 increases the number of links used concurrently by the AP 101 in multi-link communication, selects a frequency corresponding to a link to be added, and notifies the STA 102 of it. The frequency corresponding to the link to be added can be selected based on, for example, a predetermined condition associated with the STR operation, usable frequency bandwidths, frequency bands, combinations with the existing usable frequencies, a specific frequency, interference, and the like. As described above, according to this embodiment, the AP 101 selects a frequency as the frequency used by the link to be added so as to improve the performance of multi-link communication. This can improve the performance by increasing the number of links used concurrently in multi-link communication.

### (Second Embodiment)

In this embodiment, a description will be made using an operation example in a case where an STA 102 requests an AP 101 to add a link to be used in multi-link communication. First, assume that two links 121 and 122 are established, as links used in multi-link communication, between the AP 101 and the STA 102. In this embodiment, these links will be referred to as existing links hereinafter. Assume also that the AP 101 sets, as a frequency used by the self-apparatus in multi-link communication, a frequency other than frequencies used by the links 121 and 122, and notifies the STA 102 of the information. Then, the STA 102 selects one frequency from the frequencies notified from the AP 101, and requests to add a link corresponding to the frequency to multi-link communication between the AP 101 and the STA 102. At this time, the STA 102 selects a frequency based on a predetermined condition. Examples of the predetermined condition for the STA 102 to select a frequency will be described below.

The STA 102 can use, as the predetermined condition, a condition associated with communication quality. For example, the STA 102 can select a link with high communication quality as a link to be added. As an example, the STA 102 can measure communication quality using a Beacon or the like received from the AP 101 at each of the frequencies usable in multi-link communication, which have been notified from the AP 101. As an example, the communication quality can be a Received Signal Strength Indicator (RSSI), a Signal to Noise Ratio (SNR), or the like. Then, the STA 102 can calculate a difference in communication quality at each frequency, and when there exists a frequency whose difference in communication quality exceeds a predetermined threshold, can select the frequency. That is, the STA 102 can select a link with communication quality higher than those of the remaining links, among links that use the frequencies usable in multi-link communication. For example, the STA 102 can perform communication with a high MCS by selecting a link with a high SNR. As a result, high throughput and a low retransmission rate can be achieved. As described above, when the STA 102 adds a link with high communication quality, it is possible to improve the effect of adding a link. Note that the STA 102 may select a link with highest communication quality among the frequencies usable in multi-link communication, which have been notified from the AP 101. Alternatively, the STA 102 can sequentially select a predetermined number of links from a link with highest communication quality, and select a link from them using a random number or another condition. Alternatively, the STA 102 can set a predetermined threshold, and select, using a random number or another condition, one link from links for each of which an index indicating communication quality such as an SNR or RSSI exceeds the predetermined threshold.

Note that the STA 102 can select a link by evaluating the communication quality of each link usable in multi-link communication with the AP 101. For example, the STA 102 can establish each of the links with which multi-link communication with the AP 101 can be performed, measure throughput, delay, the number of times of retransmission, and the like, and select a link whose measurement result is most satisfactory. The satisfactory measurement result can be, for example, high throughput, a small delay, a small number of times of retransmission. The STA 102 can repeatedly perform processing of sequentially establishing links using frequencies other than the frequencies used by the existing links, executing predetermined measurement, and releasing a link. Alternatively, the STA 102 may establish all links simultaneously, execute measurement, and release links other than a link to be added. In this way, the STA 102 can highly reliably add a link based on the actual measurement result. Note that the STA 102 can store the measurement result, and use it to add or delete a link next. This can avoid a procedure of measuring each link and establishing and releasing a link for measurement.

The STA 102 can use, as the predetermined condition, a condition associated with the STR operation. For example, the STA 102 can select such link that the STR operation can be executed using the link to be added and each of the existing links. If the STR operation can be executed using the added link and each of the existing links, data and the like can be transmitted/received in each link without any restriction. Therefore, it is possible to obtain the effect such as improvement of throughput in accordance with the addition of the link. In a case where the NSTR operation is performed using the added link and the existing link, if the STA 102 acquires a transmission right in one link but cannot acquire a transmission right in the other link, transmission may be delayed. Since it may be more difficult for the STA 102 to acquire a transmission right than the AP 101, by the STR operation being unable to be executed, the possibility that a channel can be accessed further lowers. As a result, delay in the STA 102 may be increased. As described above, by adding a link that allows the STA 102 to execute the STR operation, performance obtained by adding a link is improved without any problem such as an increase in delay in the existing link. A method of determining a link that allows the STA 102 to execute the STR operation is the same as the method of selecting a frequency with which the AP 101 can execute the STR operation according to the first embodiment and a description thereof will be omitted. The predetermined condition associated with the STR operation may be used in combination with another condition, and in a case where there exist a plurality of candidate frequencies, a frequency satisfying the predetermined condition associated with the STR operation is preferentially selected.

The STA 102 can use, as the predetermined condition, a condition associated with interference. For example, the STA 102 can select a frequency with a small interference amount. As an example, the STA 102 can select a frequency at which the number of other STAs connected to the AP 101 to which the self-apparatus is connected is small. Since the number of STAs that use the same frequency is small, the STA 102 readily acquires a transmission right, thereby making it possible to improve throughput and delay. For example, the STA 102 can acquire the number of STAs connected to the AP 101 at each frequency used by the AP 101 in multi-link communication, and select a frequency at which the number of STA is smallest. Alternatively, the STA 102 can scan each frequency using the antenna of the self-apparatus, and select a frequency with low interference. A method of determining a frequency with low interference by the STA 102 is the same as the method of determining a frequency with low interference by the AP 101 according to the first embodiment and a description thereof will be omitted.

The STA 102 can use, as the predetermined condition, a condition associated with a frequency bandwidth usable by a candidate frequency. For example, the STA 102 can select a frequency whose bandwidth usable in communication is wide. When the STA 102 selects a frequency that can use a wide bandwidth, a communication capacity that increases by adding a link can be increased. In a case where there exist a plurality of candidate frequencies, the STA 102 can select a frequency whose usable frequency bandwidth is widest among the candidate frequencies. In a case where there exist a plurality of frequencies whose usable frequency bandwidths are widest, the STA 102 can select one frequency from them based on a random number or the like. The STA 102 can sequentially select a predetermined number of frequencies from a frequency whose usable frequency bandwidth is widest, and select, for example, one frequency from them using a random number or another condition. Alternatively, the STA 102 can set a predetermined threshold concerning a usable frequency bandwidth, and select one frequency from frequencies that can use frequency bandwidths equal to or larger than the threshold.

The STA 102 can use, as the predetermined condition, a condition associated with a frequency band to which a candidate frequency belongs. For example, the STA 102 can select a frequency belonging to a specific frequency band. When, for example, the STA 102 selects a frequency belonging to the 6-GHz band, the ratio of communication apparatuses that use the MCS of a high transmission rate is high, and thus the STA 102 can select a frequency so as to improve throughput and delay, as compared with other frequency bands. By selecting, for example, a frequency belonging to the 2.4-GHz band, the STA 102 can select a frequency at which communication can be continued even at a position far from the AP 101. By selecting, for example, a frequency using a frequency band belonging to the 5-GHz band, the STA 102 can select a frequency at which congestion is difficult to occur, as compared with a case of using the 2.4-GHz band, and at which connection to the AP 101 is readily maintained, as compared with a case of using the 6-GHz band. The STA 102 can set a priority order for the frequency bands usable by the communication interfaces of the self-apparatus, and perform selection in accordance with the priority order based on frequency bands to which the respective candidate frequencies belong. For example, if there are frequencies belonging to the frequency band having the highest priority level in the candidate frequencies, the STA 102 can select one frequency from them. Note that if there exist a plurality of frequencies belonging to a frequency band having a high priority level, the STA 102 can select one frequency from them based on a random number or the like. Alternatively, the AP 101 can sequentially select a predetermined number of frequencies from a frequency belonging to a frequency band having a high priority level, and then select, for example, one frequency from them using a random number or another condition.

The STA 102 can use, as the predetermined condition, a condition associated with a combination with the existing link. For example, the STA 102 can select a frequency belonging to a frequency band different from the frequency band used by the existing link 121 or 122. Alternatively, the STA 102 can select a frequency that belongs to the same frequency band as that used by the existing link 121 or 122 and is separated from the frequency used by the existing link. This decreases the possibility of occurrence of interference between the links, thereby increasing, for example, the possibility that the STR operation can be executed. On the other hand, in a case where the AP 101 performs cooperative transmission with another AP, the STA 102 can select the same frequency as that used by the AP as the partner of the AP 101. When the STA 102 adds a link that uses the frequency used by both the two APs, cooperative transmission between the APs is readily performed.

The STA 102 can use, as the predetermined condition, a condition associated with a specific frequency. For example, the STA 102 can select a frequency other than the specific frequency. As an example, by selecting a frequency other than a frequency at which a radar exists, the STA 102 can avoid change of the frequency when the DFS operation is executed or the radar is detected. Alternatively, the STA 102 can select a frequency other than a PSC in the 6-GHz band and channel 6 in the 2.4-GHz band. By selecting a frequency other than these frequencies, a transmission right may readily be acquired. On the other hand, the STA 102 can select the specific frequency. For example, since the frequency at which the radar exists may not be used by other communication apparatuses, the STA 102 can increase the possibility of acquiring a transmission right by selecting the frequency at which the radar exists. The STA 102 can select the PSC in the 6-GHz band or channel 6 in the 2.4-GHz band. By selecting these frequencies, it becomes easy to perform direct communication with another STA using the same frequency. If a plurality of candidate frequencies remain as a result of selecting a frequency using another condition, the STA 102 can select a specific frequency or a frequency other than the specific frequency from the candidate frequencies. Alternatively, the STA 102 can select a specific frequency, or one frequency from frequencies other than the specific frequency using another condition.

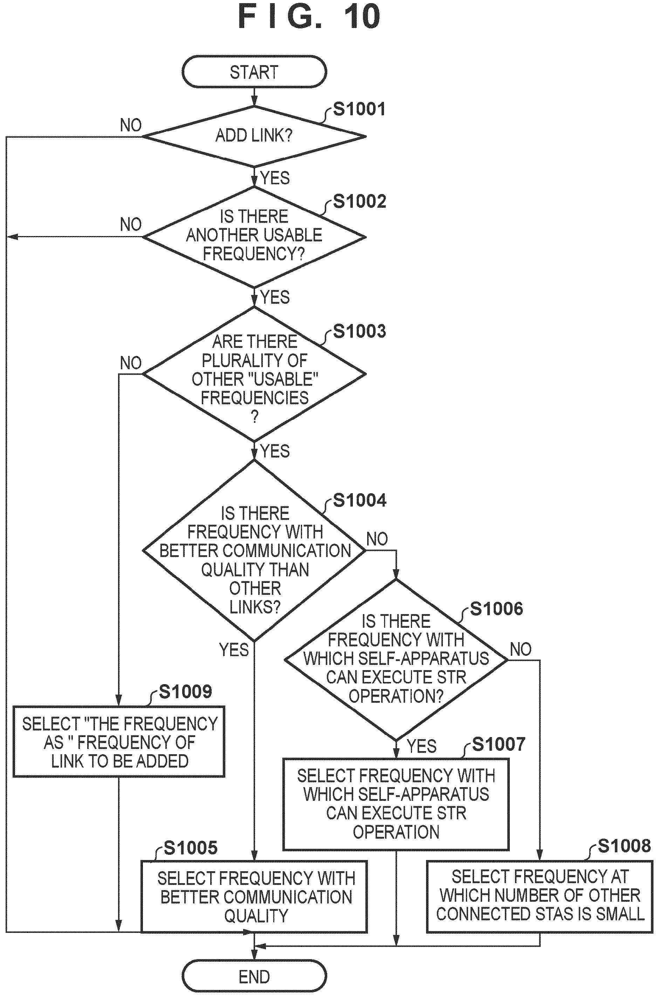

Fig. 10 shows an example of a flowchart in a case where the STA 102 selects a frequency used by a link to be added when requesting the AP 101 to add the link according to this embodiment. In this flowchart, as described above, assume that the two links 121 and 122 are established, as links used in multi-link communication, between the AP 101 and the STA 102. The STA 102 determines whether to add the third link with respect to the two existing links (step S1001). For example, the STA 102 may execute the determination processing when the self-apparatus is connected to the AP 101 or may periodically execute the determination processing. In a case where a communication traffic amount processed by the self-apparatus increases, the STA 102 may execute the determination processing. For example, in a case where a communication frequency or a communication amount with the AP 101 exceeds a threshold (the amount of communicated data or the number of data packets exceeds a predetermined threshold), the STA 102 can determine to add the link. In a case where the number of other connected STAs in the link 121 or 122 exceeds a threshold or a case where the number of other connected STAs at another frequency is smaller than a threshold, the STA 102 can determine to add the link. In a case where the STA 102 accepts, at the input of a setting change by the user, an instruction to add the link, the STA 102 can determine to add the link. In a case where the self-apparatus is connected to a power supply, or a case where a remaining battery amount is equal to or larger than a predetermined threshold, the STA 102 can determine to add the link. Furthermore, in a case where a specific kind of data such as print data or image (photo, moving image, or the like) data is communicated in communication with the AP 101, or a case where data of a specific application is communicated, the STA 102 can determine to add the link. Note that in a case where the STA 102 detects that traffic is congested in the link 121 or 122, the STA 102 can determine to add the link.

If the STA 102 determines to add the link (YES in step S1001), it determines whether there exists another frequency, other than the existing links, usable in multi-link communication with the AP 101 (step S 1002). Note that in a case where there is another AP that is physically different from the AP 101 and forms the same AP MLD as that of the AP 101, if there is a frequency usable with this AP, the STA 102 can include the frequency as a frequency usable in multi-link communication. If there is no other frequency (NO in step S 1002), the STA 102 ends the processing. Alternatively, if there exists another frequency (YES in step S1002 and NO in step S1003), the STA 102 decides the frequency as the frequency of the link to be added (step S1009). On the other hand, if there exist a plurality of other frequencies (YES in steps S 1002 and S 1003), the STA 102 selects a frequency from the candidate frequencies. For example, if there exist frequencies at each of which communication quality is better than those at other frequencies (YES in step S 1004), the STA 102 can select a frequency of highest communication quality from them (step S1005). For example, the STA 102 compares the SNR or the like of a frame received from the AP 101 at each candidate frequency, and if there are one or more frequencies in which a difference of the SNR between the frequency and other frequency is larger than a predetermined threshold, can select a frequency with the highest SNR among the frequencies. Note that the STA 102 may perform determination based on the presence/absence of a frequency at which an index (SNR or the like) that can specify communication quality at each candidate frequency exceeds a predetermined threshold. In this case, the STA 102 can select a frequency at which the numerical value of the index is highest, from the one or more frequencies at each of which the index exceeds the predetermined threshold.

If the difference in communication quality between the candidate frequencies is not large (NO in step S1004), the STA 102 determines the presence/absence of a frequency with which the self-apparatus can execute the STR operation with respect to each of the existing links (the links 121 and 122) (step S 1006). If there exists a frequency with which the STR operation is possible (YES in step S 1006), the STA 102 decides the frequency as the frequency of the link to be added (step S1007). If there is no frequency with which the STR operation is possible (NO in step S1006), the STA 102 can select, as the frequency of the link to be added, a frequency at which the number of other connected STAs is small (step S 1008). Note that if there exist a plurality of frequencies as frequencies with which the STR operation is possible, the STA 102 can select, in step S1007, the frequency of the link to be added using another method described above. The STA 102 can select, in step S1008, the frequency of the link to be added using another method described above, instead of the method of selecting, as the frequency of the link to be added, the frequency at which the number of other connected STAs is small. Note that the method of selecting, by the STA 102, the frequency of the link to be added from the plurality of candidate frequencies may be implemented by a combination of the above-described plurality of methods, and can be executed in arbitrary order when the methods are used in combination. That is, the STA 102 can select a frequency using the above-described arbitrary predetermined conditions individually or in combination.

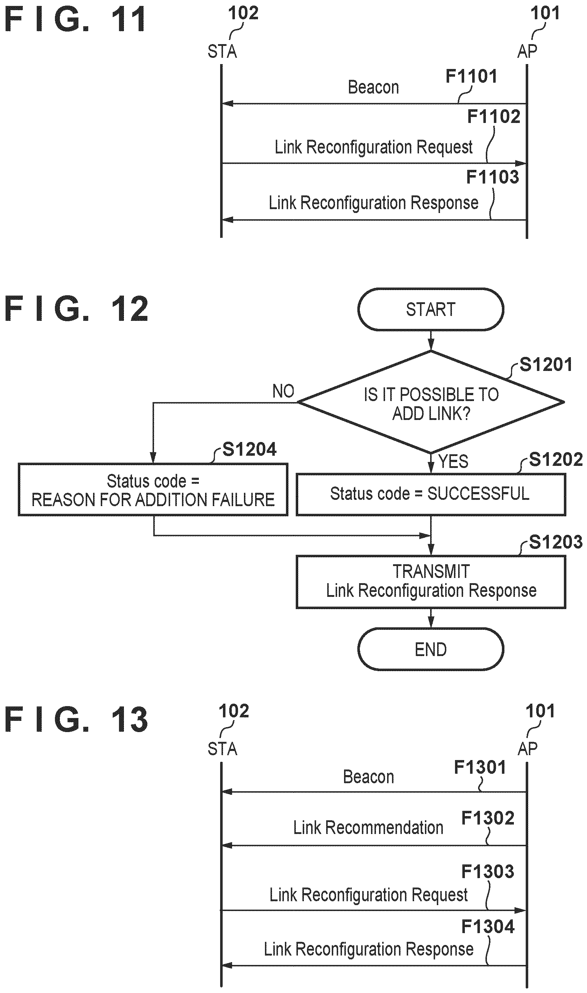

Fig. 11 shows an example of a sequence when the STA 102 requests the AP 101 to add a link according to this embodiment. In this example, the STA 102 requests the AP 101 to add a link during multi-link communication. First, assume that the links 121 and 122 are established between the AP 101 and the STA 102. Assume also that the Link IDs assigned to the links 121 and 122 are 1 and 2, respectively. On the other hand, the AP 101 includes links usable in multi-link communication in addition to the links 121 and 122, and the Link IDs of the links are 3 to N where N can be an integer of 3 or more. First, by using a Beacon, the AP 101 notifies link information including frequencies usable in multi-link communication with the self-apparatus (F1101). The STA 102 can receive the Beacon (or Probe Response) transmitted from the AP, and recognize a fact that the Link ID = 1 to N is usable, a frequency used by each link, and the like from a Multi-Link element included in the Beacon. Then, the STA 102 selects, between F1101 and F1102, a link to be added, and requests the AP 101 to add the link (F1102). For example, the STA 102 can select a link to be added using the example of the flowchart shown in Fig. 10. For example, the STA 102 can request the AP 101 to add a link using a Link Reconfiguration Request. The Link Reconfiguration Request can be an Action frame. Upon receiving the Link Reconfiguration Request, the AP 101 determines whether the requested link can be added, and notifies the STA 102 of a determination result (F1103). For example, the AP 101 can transmit, using a Link Reconfiguration Response, a response to the link addition request to the STA 102. Then, the AP 101 and the STA 102 execute multi-link communication using the plurality of links including the added link.

Fig. 12 shows an example of a flowchart when the AP 101 determines, based on the request from the STA 102, whether the link can be added and transmits a response. First, upon receiving the link addition request from the STA 102, the AP 101 determines whether the link can be added (step S1201). If the link can be added (YES in step S1201), the AP 101 sets Success in a Status code (step S1202). If the link cannot be added (NO in step S1201), the AP 101 indicates the reason for a failure in the Status code (step S1204). If, for example, the reason for a failure of link addition is that the number of connected STAs exceeds a predetermined number, a value of 17 can be set (DENIED_NO_MORE_STAS). The notification of the Status code is performed for all the links, including the link to be added, requested by the STA 102. The AP 101 notifies the STA 102 of a response including the Status code. For example, the AP 101 can notify the STA 102 of the Link Reconfiguration Response including the Status code.

Fig. 8B shows an example of the structure of a Link Reconfiguration Request frame 822 according to this embodiment. The Link Reconfiguration Request frame 822 includes a Category field 801, a Protected EHT Action field 802, and a Dialog Token field 803. In addition, the Link Reconfiguration Request frame 822 can include a Reconfiguration Multi-Link field 804 and an OCI field 805. The Category field 801, the Protected EHT Action field 802, and the Dialog Token field 803 are the same as those of the Link Reconfiguration Notify frame 821 and a description thereof will be omitted. The Reconfiguration Multi-Link field 804 is also the same as that of the Link Reconfiguration Notify frame 821. Note that the Protected EHT Action field 802 stores a value of 11, and indicates that this frame is a Link Reconfiguration Request frame. The OCI field 805 is optional, and indicates an Operating Class and a Primary Channel Number. This can specify a frequency used by the link to be added. Note that the Link ID subfield 715 included in the Per-STA Profile subelement 717 in the Reconfiguration Multi-Link field 804 may indicate the link to be added.

Fig. 8C shows an example of the structure of a Link Reconfiguration Response frame 823 according to this embodiment. The Link Reconfiguration Response frame 823 includes the Category field 801, the Protected EHT Action field 802, and the Dialog Token field 803. In addition, the Link Reconfiguration Response frame 823 can include a Count field 806, a Reconfiguration Status List field 807, and a Group Key Data field 808. The Link Reconfiguration Response frame 823 can also include the OCI field 805 and a Basic Multi-Link element 809. The Category field 801, the Protected EHT Action field 802, and the Dialog Token field 803 are the same as those of the Link Reconfiguration Notify frame 821 and a description thereof will be omitted. Note that the Protected EHT Action field 802 stores a value of 12, and indicates that this frame is a Link Reconfiguration Response frame. The Count field 806 indicates the number of links included in the succeeding Reconfiguration Status List field 807. The Reconfiguration Status List field 807 includes information of links, the number of which corresponds to the number indicated by the Count field 806. For example, the Reconfiguration Status List field includes a pair of a Link Id Info subfield and a Status subfield corresponding to each link. The Link ID Info subfield includes a Link ID subfield that specifies a link corresponding to the information. The Status subfield stores the Status code corresponding to each link. This indicates whether each link requested by the STA 102 can be added. The Group Key Data field 808 is optional, and describes Group Key Data used by the link to be added. Thus, exchange of a Group Key can be completed simultaneously with addition of the link. The OCI field 805 is optional, and can be included in a case where the Link Reconfiguration Response frame 823 includes the Group Key Data field 808. The OCI field 805 can be used to specify a frequency at which the Group Key is operated. The Basic Multi-Link element 809 is optional, and can store Per-STA Profile Information including detailed information concerning the link to be added.

As described above, according to this embodiment, to increase the number of links used concurrently in multi-link communication, the STA 102 selects a frequency and requests the AP 101 to add a link that uses the selected frequency. The frequency corresponding to the link to be added can be selected based on a predetermined condition associated with communication quality, the STR operation, interference, usable frequency bandwidths, frequency bands, combinations with the existing links, a specific frequency, and the like. As described above, according to this embodiment, the STA 102 selects a frequency as the frequency used by the link to be added so as to improve the performance of multi-link communication. This can improve the performance by adding the link in multi-link communication.

### (Third Embodiment)

In this embodiment, a description will be made using an operation example in a case where an AP 101 recommends an STA 102 to add a link to be used in multi-link communication and the STA 102 requests the AP 101 to add a link in response to this. Similar to the second embodiment, assume that two links 121 and 122 are established, as links used in multi-link communication, between the AP 101 and the STA 102. In this embodiment, these links will be referred to as existing links hereinafter. Assume also that the AP 101 sets, as a frequency used by the self-apparatus in multi-link communication, a frequency other than frequencies used by the links 121 and 122, and notifies the STA 102 of the information. Then, the AP 101 selects a frequency other than the frequencies used by the existing links (links 121 and 122), and recommends the STA 102 to add a link that uses the selected frequency to multi-link communication between the AP 101 and the STA 102. The STA 102 determines whether to add the link recommended by the AP 101. If the STA 102 determines to add the link, it requests the AP 101 to add the link. An exchange sequence between the AP 101 and the STA 102 and the formats of frames to be used will be described below.

Fig. 13 shows an example of an exchange sequence between the AP 101 and the STA 102 according to this embodiment. In this example, the AP 101 recommends the STA 102 to add a link during multi-link communication. Assume that Link IDs assigned to the links 121 and 122 established between the AP 101 and the STA 102 are 1 and 2, respectively. Assume also that the Link IDs of links usable by the AP 101 in multi-link communication, other than the links 121 and 122, are 3 to N where N can be an integer of 3 or more. First, by using a Beacon, the AP 101 notifies link information including frequencies usable in multi-link communication with the self-apparatus (F1301). For example, the STA 102 receives the Beacon (or Probe Response) transmitted from the AP, and recognizes a fact that the Link ID = 1 to N is usable, a frequency used by each link, and the like from a Multi-Link element included in the Beacon. Then, the AP 101 selects, between F1301 and F1302, a frequency used by the recommended link, and recommends the STA 102 to add the link (F1302). For example, the AP 101 can recommend the STA 102 to add the link using a Link Recommendation frame. The AP 101 can recommend the STA 102 to add the link using a Link Reconfiguration Notify frame. Upon receiving the link addition recommendation from the AP, the STA 102 determines whether to add the link. If it is determined to add the link, the STA 102 requests the AP 101 to add the link (F1303). For example, the STA 102 can request to add the link using a Link Reconfiguration Request. Note that when recommending to add a link, the AP 101 may recommend the STA 102 to add the link by including information for specifying a frequency used by the link to be added. The STA 102 may request to add a link that uses the frequency recommended by the AP 101 or request to add a link that uses another frequency selected by the self-apparatus. Upon receiving the link addition request from the STA 102, the AP 101 determines whether the requested link can be added, and notifies the STA 102 of a determination result (F1304). For example, by using a Link Reconfiguration Response, the AP 101 can request, of the STA 102, a response to the link addition request.

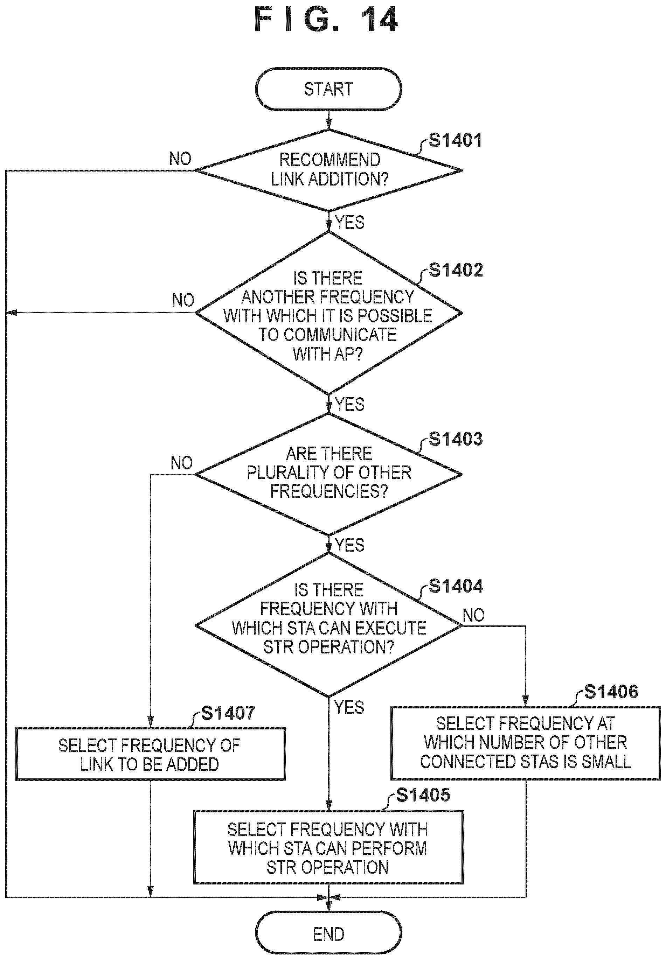

Fig. 14 shows an example of a flowchart when the AP 101 selects a frequency used by the link recommended to the STA 102. In this flowchart, as described above, assume that the AP 101 establishes the links 121 and 122 with the STA 102 among the links (Link ID = 1 to N) usable in multi-link communication. Then, the AP 101 determines whether to add the third link with respect to the two existing links (step S1401). For example, the AP 101 can execute the determination processing when the AP 101 is connected to the STA 102. The AP 101 can periodically execute the determination processing after the AP 101 is connected to the STA 102. In a case where a communication frequency or a communication amount with the STA 102 exceeds a threshold (the amount of communicated data or the number of data packets exceeds a threshold), a case where the number of connected STAs that use the same link exceeds a threshold, or the like, the AP 101 can determine to recommend to add a link. Alternatively, in a case where the number of other connected STAs at a frequency that is not used in multi-link communication with the STA 102 is smaller than a threshold, the AP 101 can determine to recommend to add a link. In a case where the AP 101 accepts, at the input of a setting change by the user, an instruction to add a link with the STA 102, the AP 101 can determine to recommend to add a link. In a case where the self-apparatus is connected to a power supply, or a case where a remaining battery amount is equal to or larger than a predetermined threshold, the AP 101 can determine to recommend to add a link. Furthermore, in a case where a specific kind of data such as print data or image (photo, moving image, or the like) data is communicated in communication with the STA 102, or a case where data of a specific application is communicated, the AP 101 can determine to recommend to add a link.

If the AP 101 determines to recommend to add a link (YES in step S1401), it determines whether there exists a frequency, other than the frequencies used by the existing links, usable in multi-link communication with the STA 102 (step S1402). If there is no other frequency (NO in step S1402), the AP 101 ends the processing. Alternatively, if there exists another frequency (YES in step S1402 and NO in step S1403), the AP 101 selects the frequency as the frequency used by the link to be added (step S1407). On the other hand, if there exist a plurality of other frequencies (YES in steps S 1402 and S1403), the AP 101 selects a frequency from the candidate frequencies. For example, the AP 101 determines the presence/absence of a frequency with which the STA 102 can execute the STR operation with respect to each of the existing links (the links 121 and 122) (step S1404). If there exist frequencies with which the STR operation is possible (YES in step S1404), the AP 101 decides, from the frequencies, a frequency used by the link to be added (step S1405). If there is no link with which the STR operation is possible (NO in step S1404), the AP 101 selects, as the frequency of the link to be added, a frequency at which the number of other connected STAs is small (step S1406). Note that if there exist a plurality of frequencies as frequencies with which the STR operation is possible, the AP 101 can select, in step S1405, the frequency of the link to be added using another method described above. The AP 101 can select, in step S1406, the frequency of the link to be added using another method described in the first or second embodiment, instead of the method of selecting, as the frequency of the link to be added, the frequency at which the number of other connected STAs is small. Note that the method of selecting, by the AP 101, the frequency of the link to be added from the plurality of candidate frequencies may be implemented by a combination of the plurality of methods described above in the first and second embodiments, and can be executed in arbitrary order when the methods are used in combination. That is, the AP 101 can select a frequency using the above-described arbitrary predetermined conditions individually or in combination.

Fig. 8D shows an example of the structure of a Link Recommendation frame 824 according to this embodiment. The Link Recommendation frame 824 includes a Category field 801 and a Protected EHT Action field 802. In addition, the Link Recommendation frame 824 can include a Reason Code field 810, an AID Bitmap element 811, and a Multi-Link Traffic Indication element 812. The Category field 801 and the Protected EHT Action field 802 are the same as those of the Link Reconfiguration Notify frame 821 and a description thereof will be omitted. Note that the Protected EHT Action field 802 stores a value of 7, and indicates that this frame is a Link Recommendation frame. The Reason Code field 810 indicates a reason for the AP 101 to recommend to add a link. For example, in a case where the value of the Reason Code field 810 is 72, this indicates that a communication amount increases. The Reason Code field 810 can indicate an increase in communication frequency, an increase in number of connected STAs in the existing link (link 121 or 122), or the like. Alternatively, by setting the value of the Reason Code field 810 to 1, no specific reason may be indicated (UNSPECIFIED_REASON). The AID Bitmap element 811 specifies an STA that is recommended to add a link by the Link Recommendation frame 824. For example, each bit included in the AID Bitmap element 811 corresponds to an Association Identifier (AID) for uniquely specifying each STA, and a bit corresponding to an STA that is recommended to add a link can be set to 1. Note that by setting a plurality of bits included in the AID Bitmap element 811 to 1, it is possible to recommend a plurality of STAs to add a link at once. The Multi-Link Traffic Indication element 812 indicates information for specifying the recommended link. For example, the Multi-Link Traffic Indication element 812 can set, to 1, a Link ID corresponding to the recommended link, for each AID (that is, each STA) indicated by the AID Bitmap element 811. For example, in a case where the AP 101 recommends the STA 102 to add a link, a bit corresponding to the AID of the STA 102 is set to 1 in the AID Bitmap element 811. In a case where the AP 101 recommends the link of the Link ID = 3 to the STA 102, a bit corresponding to the Link ID = 3 is set to 1 in the Multi-Link Traffic Indication element 812. By confirming the AID Bitmap element 811 of the received Link Recommendation frame 824, the STA 102 can recognize whether the self-apparatus is recommended to add a link. Similarly, the STA 102 can recognize the Link ID of the recommended link by confirming the Multi-Link Traffic Indication element 812. Note that when the Link ID of each link and the frequency used by the link are associated in one-to-one correspondence, the STA 102 can grasp the frequency of the recommended link. Note that the AP 101 can transmit a Beacon or the like including the Multi-Link Traffic Indication element 812 instead of the Link Recommendation frame 824. For example, the Beacon or the like can include a Probe Response, a FILS Discovery frame, and the Link Reconfiguration Notify frame 821. Note that the AP 101 can transmit the Link Reconfiguration Notify frame 821 including the Reconfiguration Multi-Link element to the specific STA 102, thereby recommending the STA 102 to add a link.

Upon receiving the Multi-Link Traffic Indication element 812, the STA 102 can determine whether to request to add a link and whether to add the recommended link. Note that the STA 102 can request to add a link that uses another frequency without requesting the AP 101 to add the recommended link. In this case, the STA 102 can select the frequency of the link to be added, in accordance with the example of the flowchart shown in Fig. 10. Then, the AP 101 can determine whether to permit addition of the link, in accordance with the example of the flowchart shown in Fig. 12.

As described above, according to this embodiment, in order to recommend to increase the number of links used concurrently in multi-link communication with the STA 102, the AP 101 selects a frequency, and recommends the STA 102 to add a link that uses the selected frequency. A frequency corresponding to a link to be added can be selected based on a predetermined condition associated with the STR operation, interference, usable frequency bandwidths, frequency bands, combinations with the existing links, a specific frequency, and the like. As described above, according to this embodiment, the AP 101 selects a frequency as the frequency used by the link to be added in multi-link communication with the STA 102 so as to improve the performance of the multi-link communication. This can improve the performance by adding the link in multi-link communication.

### (Fourth Embodiment)

In this embodiment, a description will be made using an operation example in a case where an AP 101 decreases the number of links used concurrently in multi-link communication. First, assume that the AP 101 sets three frequencies as frequencies usable in multi-link communication in a network 110 formed by the self-apparatus. Then, the AP 101 stops the use of one frequency among the three frequencies usable in multi-link communication. At this time, based on a predetermined condition, the AP 101 selects a frequency the use of which is to be stopped. Examples of the predetermined condition for the AP 101 to select a frequency the use of which is to be stopped will be described below.

The AP 101 can use, as the predetermined condition, a condition associated with the STR operation. For example, in a case where, among the frequencies (frequencies used in multi-link communication) set to be usable by the self-apparatus in multi-link communication, there exist combinations of frequencies with which the STR operation is impossible, the AP 101 can select a frequency the use of which is to be stopped from the frequencies. That is, if, among the frequencies used in multi-link communication, there exist combinations of frequencies as NSTR link pairs for the self-apparatus, the AP 101 can select a frequency the use of which is to be stopped from the frequencies. In a case where, among the frequencies used in multi-link communication, there exist combinations of frequencies as NSTR link pairs for an STA 102 connected to the self-apparatus, the AP 101 can select a frequency the use of which is to be stopped from the frequencies. For example, in a case where, a combination of two of the above-described three frequencies is an NSTR link pair for the self-apparatus or the STA 102, the AP 101 can select any one of the frequencies of the combination. By selecting a frequency the use of which is to be stopped so as to dissolve the NSTR link pair, restriction imposed on data transmission between the links can be released. This obtains an effect of, for example, improving throughput or delay in accordance with multi-link communication. If there exist different NSTR link pairs in the self-apparatus and the STA 102 connected to the self-apparatus, the AP 101 can select a frequency included in one of the NSTR link pairs. For example, the AP 101 can select a frequency commonly included in a plurality of NSTR link pairs. By selecting the common frequency, the NSTR link pairs in the AP 101 and the STA 102 can be dissolved. The AP 101 can preferentially select a frequency included in the NSTR link pair in the self-apparatus. Since the AP 101 may perform multi-link communication with a plurality of STAs 102, it is possible to improve the characteristic of the entire network by releasing restriction on the operation in the AP 101. On the other hand, the AP 101 can preferentially select a frequency included in the NSTR link pair in the STA 102. Since it may be more difficult for the STA 102 to perform channel access than the AP 101, it becomes easier for the STA 102 to perform channel access by releasing restriction on the operation in the STA 102. Note that in a case where there exist a plurality of STAs 102 connected to the self-apparatus and there exist different NSTR link pairs in the plurality of STAs 102, the AP 101 can select a frequency included in one of the NSTR link pairs. For example, the AP 101 can select a frequency commonly included in more NSTR link pairs. This can release restriction on the operation in more STAs 102. Note that as a method in which the AP 101 specifies an NSTR link pair in the self-apparatus or the STA 102, the method described above in the first embodiment or the like can be applied. The predetermined condition associated with the STR operation may be used in combination with another condition. If there exist a plurality of candidate frequencies, a frequency satisfying the predetermined condition associated with the STR operation is preferentially selected. Note that the AP 101 can use a Frequency Separation For STR/AP MLD Type Indication subfield to acquire a frequency interval with which the STR operation is possible. In a case where, among the combinations of the frequencies used in multi-link communication, there is a combination whose frequency interval is smaller than the frequency interval indicated by the subfield, the AP 101 can select a frequency the use of which is to be stopped from the frequencies included in the combination.

The AP 101 can use, as the predetermined condition, a condition associated with frequency bandwidths usable by the frequencies used in multi-link communication. For example, the AP 101 can select, as a frequency the use of which is to be stopped, a frequency whose usable frequency bandwidth is relative narrow from the frequencies used in multi-link communication. For example, assume that the frequencies used by the AP 101 in multi-link communication include channel 36 in the 5-GHz band and channel 5 in the 6-GHz band, which can use bandwidths of 80 MHz and 320 MHz, respectively. In this case, the AP 101 can select, as a frequency the use of which is to be stopped, channel 36 in the 5-GHz band whose usable bandwidth is relative narrow. This can reduce influence on throughput or a communication amount, which is imposed by decreasing the number of links used concurrently by the AP 101 in multi-link communication. On the other hand, the AP 101 can select, as a frequency the use of which is to be stopped, a frequency whose usable frequency bandwidth is relatively wide from the frequencies used in multi-link communication. For example, assume that the frequencies used by the AP 101 in multi-link communication include channel 36 in the 5-GHz band and channel 5 in the 6-GHz band, which can use bandwidths of 80 MHz and 320 MHz, respectively. In this case, the AP 101 can select, as a frequency the use of which is to be stopped, channel 5 in the 6-GHz band whose usable bandwidth is relative wide. For example, in a case where the purpose of decreasing the number of links used concurrently by the AP 101 in multi-link communication is to save power by decreasing the communication amount in the self-apparatus, or reduce interference with another communication apparatus, the effect can be improved by releasing a frequency that can use a wide bandwidth. That is, this reduces the power consumption of the self-apparatus or the STA 102, and allows surrounding communication apparatuses to readily ensure radio resources. As a method in which the AP 101 acquires a frequency bandwidth usable by each frequency, the method described above in the first embodiment or the like can be applied. Note that in a case where, among the frequencies used in multi-link communication, there exist a plurality of frequencies whose usable bandwidths are widest or narrowest, the AP 101 can select one frequency from them based on a random number, another condition, or the like. Alternatively, the AP 101 can set a predetermined threshold, and select one frequency based on a random number, another condition, or the like from frequencies whose usable bandwidths are wider or narrower than the threshold. Note that the AP 101 can select a frequency the use of which is to be stopped from frequencies other than a frequency whose usable bandwidth is widest or narrowest among the frequencies used in multi-link communication. The AP 101 can set a predetermined threshold, and select a frequency the use of which is to be stopped from frequencies other than frequencies whose usable bandwidths are wider or narrower than the threshold.

The AP 101 can use, as the predetermined condition, a condition associated with a frequency band to which each of the frequencies used in multi-link communication belongs. For example, the AP 101 can select, as a frequency the use of which is to be stopped, a frequency belonging to a specific frequency band from the frequencies used in multi-link communication. Alternatively, the AP 101 can select a frequency the use of which is to be stopped from the frequencies belonging to the remaining frequency bands other than the frequency belonging to a specific frequency band. For example, assume that the frequencies used by the AP 101 in multi-link communication are frequencies belonging to the 2.4-GHz band, the 5-GHz band, and the 6-GHz band. In this case, the AP 101 can select, as a frequency to be maintained, the frequency belonging to the 6-GHz band, and select a frequency the use of which is to be stopped from the frequencies belonging to the 2.4-GHz band and the 5-GHz band. When the frequency belonging to the 6-GHz band is maintained, a relatively higher communication rate can be implemented. If the product model and standard (IEEE802.11ax and the like) supporting the 6-GHz band are limited, the number of communication apparatuses that use the same frequency is small, and thus higher throughput can be obtained in communication between the AP 101 and the STA 102. Furthermore, if the communication apparatus that implements the legacy standard does not use the 6-GHz band, only Modulation and Coding Scheme (MCS) that implements a high frame rate is used. As a result, since the time during which each communication apparatus occupies the frequency is short and congestion of traffic is suppressed, it becomes easy to acquire a transmission right in communication between the AP 101 and the STA 102, and delay can be reduced. The AP 101 can select, as a frequency to be maintained, the frequency belonging to the 2.4-GHz band, and select a frequency the use of which is to be stopped from the frequencies belonging to the 5-GHz band and the 6-GHz band. As compared with the remaining frequency bands, in the 2.4-GHz band, the number of communication apparatuses supporting the 2.4-GHz band is large and interconnectivity is high. Therefore, when the frequency belonging to the 2.4-GHz band is maintained, the AP 101 can accommodate more communication terminals. In addition, as compared with the remaining frequency bands, in the 2.4-GHz band, a range within which radio waves reach is wide, and thus a wider range can be covered. The AP 101 can select, as a frequency to be maintained, the frequency belonging to the 5-GHz band, and select a frequency the use of which is to be stopped from the frequencies belonging to the 2.4-GHz band and the 6-GHz band. In the 5-GHz band, since interference is less than in the 2.4-GHz band and the number of communication terminals supporting the 5-GHz band is larger than that of communication terminals supporting the 6-GHz band, the 5-GHz band is a frequency band having the advantages of the 2.4-GHz band and the 6-GHz band. Therefore, it is possible to accommodate a number of communication apparatuses and to perform communication with high communication quality. If the frequencies used in multi-link communication include a plurality of frequencies belonging to the same frequency band, the AP 101 can select a frequency the use of which is to be stopped from the frequencies belonging to the same frequency band. This can increase the frequency interval between the frequencies used by the plurality of links, and thus increase the possibility that the STR operation can be executed in each link and reduce interference between the links. For example, if the frequencies used by the AP 101 in multi-link communication are channel 36 in the 5-GHz band and channels 5 and 213 in the 6-GHz band, the AP 101 can select channel 5 in the 6-GHz band as a frequency the use of which is to be stopped. Similarly, even if the frequency bands to which the frequencies used by the self-apparatus in multi-link communication belong are different from each other, the AP 101 can preferentially select a frequency included in a combination of frequencies relatively close to each other. This can increase the frequency interval between frequencies that are maintained as frequencies usable by the AP 101 in multi-link communication.

The AP 101 can use, as the predetermined condition, a condition associated with a specific frequency. For example, if the frequencies used in multi-link communication include a frequency that needs to implement the DFS function, the AP 101 can preferentially select the frequency as a frequency the use of which is to be stopped. This eliminates the necessity of executing the DFS function, and can avoid the possibility that the frequency is changed due to detection of a radar. On the other hand, the AP 101 can maintain the frequency that needs to implement the DFS function, and preferentially select another frequency as a frequency the use of which is to be stopped. Since the frequency that needs to implement the DFS function can be a frequency at which the number of communication terminals is relatively small, the AP 101 can maintain a frequency at which a relatively high communication rate is obtained. If the frequencies set to be usable by the self-apparatus in multi-link communication include the PSC, the AP 101 can preferentially select the PSC as a frequency the use of which is to be stopped. Thus, it becomes difficult to detect the AP 101 from the STA, and it is, therefore, possible to reduce the possibility that transmission of a data frame is hindered by transmission/reception of a control frame such as a Probe Response. On the other hand, the AP 101 can maintain the PSC, and preferentially select, as a frequency the use of which is to be stopped, a frequency other than the PSC. Since this can maintain the possibility that the AP 101 is detected from the STA, it is possible to reduce the number of frequencies usable in multi-link communication while ensuring connectivity.

The AP 101 can use, as the predetermined condition, a condition associated with interference. For example, the AP 101 can select a frequency with high interference as a frequency the use of which is to be stopped from the frequencies used by the self-apparatus in multi-link communication. For example, based on an index representing the interference amount detected by the self-apparatus during communication, the AP 101 can maintain a frequency with low interference, and select a frequency the use of which is to be stopped from the remaining frequencies. The index representing the interference amount can include the number of Beacons or the like from another AP and the number of other frames at each frequency, and the ratio per unit time of a period in which the frequency is busy. The AP 101 causes the connected STA 102 to notify surrounding interference, and can select a frequency the use of which is to be stopped, based on interference detected by the self-apparatus and the interference reported from the STA 102. As a method in which the AP 101 specifies the interference amount at each frequency, the method described in the first embodiment or the like can be applied. This can reduce influence on throughput or communication amount, which is imposed by decreasing the number of links used concurrently by the AP 101 in multi-link communication. Note that the AP 101 can set a predetermined threshold, and select, based on a random number, another condition, or the like, one of frequencies at each of which the index representing the interference amount exceeds the predetermined threshold. The index representing the interference amount can be the ratio per unit time of a period in which the frequency is busy, the number of other APs, the number of received frames, the strength of a signal received from another network, or the like.

The AP 101 can use, as the predetermined condition, a condition associated with the number of STAs connected to the self-apparatus. For example, among the frequencies used by the self-apparatus in multi-link communication, the AP 101 can select, as a frequency the use of which is to be stopped, a frequency at which the number of STAs used in multi-link communication with the self-apparatus is small. By selecting a frequency at which the number of STAs used is small, it is possible to reduce influence on communication with the STA 102, which is imposed by decreasing the number of links used concurrently by the AP 101 in multi-link communication. Note that in a case where the STA 102 uses, in multi-link communication, a frequency to be deleted, the AP 101 may recommend the STA 102 to shift to another frequency usable in multi-link communication. For example, the AP 101 can recommend the STA 102 to shift to another frequency by transmitting a BSS Transition Management Query frame or a BSS Transition Management Request frame to the STA 102. The AP 101 can make a notification of a remaining period until the use of the frequency is stopped, the shift destination frequency, and the like by the BSS Transition Management Request frame. If, as a result of recommending a plurality of STAs to shift to another frequency, the number of STAs that use each frequency changes, the AP 101 may select, based on the changed number of STAs, a frequency the use of which is to be stopped. For example, the AP 101 selects a plurality of candidates of a frequency the use of which is to be stopped, and recommends the STA 102, that uses any of the frequencies in multi-link communication, to shift to another frequency. Then, after a predetermined period elapses, the AP 101 can select, as a frequency the use of which is to be stopped, a candidate frequency used by a small number of STAs 102. Alternatively, the AP 101 can select, as a frequency to be maintained, a frequency used by a large number of STAs 102, and select a frequency the use of which is to be stopped from the remaining frequencies.

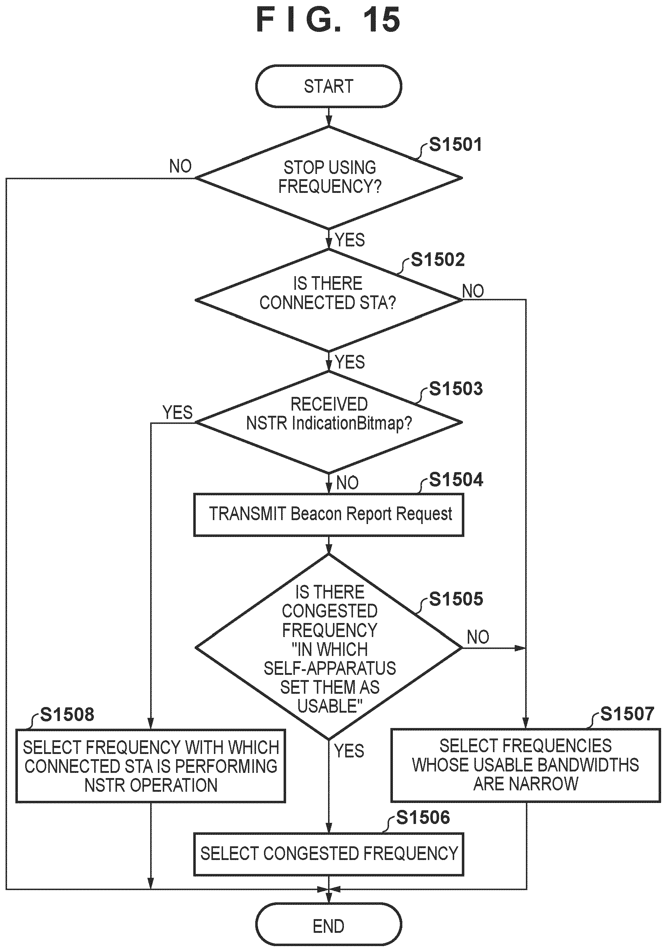

Fig. 15 shows an example of a flowchart in a case where the AP 101 decreases the number of links used concurrently in multi-link communication with the self-apparatus, and selects a frequency the use of which is to be stopped according to this embodiment. In this flowchart, as described above, assume that the AP 101 sets three frequencies as frequencies usable in multi-link communication in the network 110 formed by the self-apparatus. Then, the AP 101 determines whether to stop the use of any one of the three frequencies (step S1501). For example, the AP 101 may execute the determination processing at the start of an operation as an AP, or may periodically execute the determination processing. In a case where a communication traffic amount processed by the self-apparatus decreases, the AP 101 may execute the determination processing. For example, in a case where a communication frequency or a communication amount with the STA 102 is smaller than a threshold (the amount of communicated data or the number of data packets is smaller than a predetermined threshold), a case where the number of connected STAs is smaller than a threshold, or the like, the AP 101 can determine to stop the use of any one of the frequencies. In a case where the AP 101 accepts, at the input of a setting change by the user, an instruction to decrease the number of links used concurrently in multi-link communication or stop the use of a frequency, the AP 101 can determine to stop the use of any one of the frequencies. In a case where the power supply of the self-apparatus is removed, or a case where a remaining battery amount is equal to or smaller than a predetermined threshold, the AP 101 can determine to stop the use of any one of the frequencies. Furthermore, in a case where communication of a specific kind of data such as print data or image (photo, moving image, or the like) data in communication between the AP 101 and the STA 102 or communication of data of a specific application is complete, the AP 101 can determine to stop the use of any one of the frequencies. In a case where the AP 101 detects interference exceeding the threshold at the frequency used by the self-apparatus in multi-link communication, the AP 101 can determine to stop the use of the frequency. In this case, the AP 101 can add another frequency as a frequency usable by the self-apparatus in multi-link communication before or after stopping the use of that frequency. That is, when the AP 101 changes the frequency usable by the self-apparatus in multi-link communication, the AP 101 can also determine to stop the use of the frequency. For example, even in a case where less interference or less congestion is detected at another frequency, a case where a DFS operation is performed, or the like, the AP 101 can change the frequency to the other frequency.

If the AP 101 determines to stop the use of the frequency (YES in step S1501), it determines whether there exists a connected STA (step S1502). If there is no connected STA (NO in step S1502), the AP 101 can select a frequency the use of which is to be stopped from, for example, frequencies whose usable frequency bandwidths are narrow (step S1507). Alternatively, the AP 101 may select a frequency the use of which is to be stopped from frequencies whose usable frequency bandwidths are wide. The AP 101 may select a frequency belonging to a specific frequency band. A method in which the AP 101 selects a frequency the use of which is to be stopped is not limited to these, and the above-described arbitrary methods can be applied.

On the other hand, if there exists a connected STA (YES in step S 1502), the AP 101 can decide, based on information acquired from the STA 102, a frequency the use of which is to be stopped. For example, if a frame including an NSTR Indication Bitmap field is received from the STA 102 (YES in step S1503), the AP 101 can select a frequency to increase the number of STR link pairs in the STA 102 (step S1508). For example, the AP 101 can select a frequency from frequencies used for NSTR link pairs in the connected STA 102. Alternatively, if the frame including the NSTR Indication Bitmap field is not received from the STA 102 (NO in step S1503), the AP 101 can request the STA 102 to perform measurement (step S1504). For example, the AP 101 can transmit a Beacon Report Request to the STA 102. Upon receiving a Beacon Report from the STA 102, the AP 101 can select a frequency the use of which is to be stopped, in consideration of the status of interference detected by the self-apparatus. For example, the AP 101 determines whether there exists a congested frequency (high-interference frequency) exceeding a predetermined threshold among the frequencies used by the self-apparatus in multi-link communication (step S 1505). If there exist a plurality of congested frequencies exceeding the predetermined threshold (YES in step S1505), the AP 101 selects one frequency from them (step S1506). If there is no congested frequency exceeding the predetermined threshold (NO in step S1505), the AP 101 can select a frequency the use of which is to be stopped, by applying the above-described method (step S1507). Note that the method in which the AP 101 selects a frequency the use of which is to be stopped in a case where there exist a plurality of candidate frequencies is not limited to the above-described ones. For example, the AP 101 may select a frequency the use of which is to be stopped using the above-described methods in combination. That is, the AP 101 can select a frequency using the above-described arbitrary predetermined conditions individually or in combination.

A communication sequence with the STA 102 when stopping the use of any one of the frequencies used by the AP 101 in multi-link communication according to this embodiment will be described using an example of a sequence shown in Fig. 5. Note that a description of the same operations as those described with reference to Fig. 5 in the first embodiment will be omitted. In this example, the AP 101 stops the use of the frequency during multi-link communication, and notifies the STA 102 of it. First, by using a Beacon, the AP 101 notifies information (for example, the Link IDs of the three links, the frequencies used, and the like) of the links and frequencies usable in multi-link communication with the self-apparatus (F501). For example, the AP 101 notifies information of each link using a Multi-Link element included in the Beacon (or Probe Response). Then, the AP 101 selects, between F501 and F502, a frequency the use of which is to be stopped, and notifies information of the selected frequency (F502). For example, by using a Link Reconfiguration Notify frame, the AP 101 can notify information of the frequency the use of which is to be stopped. As an example, the AP 101 can use a Reconfiguration Multi-Link field 804 of a Link Reconfiguration Notify frame 821 shown in Fig. 8A. The Reconfiguration Multi-Link field 804 according to this embodiment can store a value of 0 or 3 in an Operation Update type subfield to indicate deletion of the link (the stop of the use of the frequency). In a case where the value of the Operation Update type subfield is 0, this indicates to exclude an AP. That is, this can indicate to stop one of a plurality of AP functions that correspond to the plurality of links in multi-link communication in the AP 101 and each execute an operation as an AP in the link. In a case where the value of the Operation Update type subfield is 3, this indicates to stop the use of the corresponding frequency. The AP 101 can transmit information of the updated links and frequencies in a Multi-Link element included in a subsequent Beacon or Probe Response (F503). That is, by using a Beacon or Probe Response transmitted after stopping the use of the frequency, the AP 101 can transmit information that does not includes the information of the link corresponding to the frequency the use of which has been stopped. Then, communication is executed between the AP 101 and the STA 102 using the frequencies used in multi-link communication after update without using the frequency the use of which has been stopped.

As described above, according to this embodiment, the AP 101 decreases the number of links used concurrently in multi-link communication, selects a frequency the use of which is to be stopped, and notifies the STA 102 of it. The frequency the use of which is to be stopped can be selected based on a predetermined condition associated with the STR operation, usable frequency bandwidths, frequency bands, a specific frequency, interference, the number of STAs connected to the self-apparatus, and the like. As described above, according to this embodiment, the AP 101 selects a frequency as the frequency the use of which is to be stopped so as to reduce influence on the performance of multi-link communication or improve the performance. In multi-link communication, this can suppress the performance from lowering due to a decrease in number of links used concurrently, and improve the performance.

### (Fifth Embodiment)

In this embodiment, a description will be made using an operation example in a case where an STA 102 requests an AP 101 to delete one of links used in multi-link communication. First, assume that the STA 102 establishes three links 121 to 123 as links used in multi-link communication with the AP 101. Then, the STA 102 requests the AP 101 to delete a link satisfying a predetermined condition from the three links. Examples of the predetermined condition for the STA 102 to select a link to be deleted will be described below.

The STA 102 can use, as the predetermined condition, a condition associated with communication quality. For example, the STA 102 can select, as a link to be deleted, a link corresponding to a frequency with low communication quality. As an example, the STA 102 calculates a difference in communication quality between the frequencies using an index representing communication quality such as an RSSI or an SNR. If there exist frequencies whose difference in communication quality exceeds a predetermined threshold, the STA 102 can select, as a link to be deleted, the link corresponding to the frequency with low communication quality. This allows the STA 102 to use the link with higher communication quality with the AP 101, thereby making it possible to perform communication with a high MCS. As a result, high throughput and a low retransmission rate can be achieved. As described above, by deleting a link with low communication quality, it is possible to improve the effect of deleting a link. Note that as a method in which the STA 102 specifies the communication quality of each link, the method described above in the second embodiment or the like can be applied. If there exist a plurality of combinations of frequencies whose differences in communication quality exceed the predetermined threshold, the STA 102 can select one of the frequencies with low communication quality based on a random number, another condition, or the like. The STA 102 may select a link corresponding to the frequency with lowest communication quality among the frequencies used in multi-link communication. Alternatively, the STA 102 can sequentially select a predetermined number of links from a link with lowest communication quality, and select a link from them using a random number or another condition. Alternatively, the STA 102 can set a predetermined threshold, and select, using a random number or another condition, one link from links for each of which an index indicating communication quality such as an SNR or RSSI is smaller than the predetermined threshold.

The STA 102 can use, as the predetermined condition, a condition associated with the STR operation. For example, if the frequencies used in multi-link communication with the AP 101 include a combination of frequencies with which the STR operation is impossible, the STA 102 can select a link to be deleted from the links that use the frequencies. That is, if the frequencies used in multi-link communication include a combination of frequencies as an NSTR link pair for the self-apparatus or the AP 101, the STA 102 can select a link to be deleted from the links that use the frequencies. For example, if a combination of two of the above-described three frequencies is an NSTR link pair for the self-apparatus or the AP 101, the STA 102 can select the link that uses any of the frequencies of the combination. By selecting a frequency so as to dissolve the NSTR link pair, restriction imposed on data transmission between the links can be released. This obtains an effect of improving throughput or delay in accordance with multi-link communication. Note that as a method in which the STA 102 detects an NSTR link pair in the self-apparatus or the AP 101, the method described above in the first embodiment or the like can be applied.

The STA 102 can use, as the predetermined condition, a condition associated with interference. For example, the STA 102 can select, as a link to be deleted, a link that uses a frequency at which the number of other STAs connected to the AP 101 to which the self-apparatus is connected is large or a frequency with a large interference amount. As a method in which the STA 102 acquires the number of other STAs connected to the AP 101 or the interference amount, the method described above in the first or second embodiment can be applied. This allows the STA 102 to execute multi-link communication with the AP 101 using links in which it is easy to acquire a transmission right. Note that the STA 102 can set a predetermined threshold, and select, based on a random number, another condition, or the like, one frequency from the frequencies for each of which the index representing the interference amount exceeds the predetermined threshold. The index representing the interference amount can be the ratio per unit time of a period in which the frequency is busy, the number of other APs, the number of received frames, the number of other STAs connected to the AP to which the self-apparatus is connected, the strength of a signal received from another network, or the like.

The STA 102 can use, as the predetermined condition, a condition associated with the frequency bandwidths usable by the frequencies used in multi-link communication. For example, the STA 102 can select, as a link to be deleted, a link that uses a frequency whose bandwidth usable in communication is narrow. By selecting a link that uses a frequency whose usable bandwidth is narrow, it is possible to reduce an amount of decreased communication capacity by deleting the link. On the other hand, the STA 102 can select, as a link to be deleted, a link that uses a frequency whose usable bandwidth is wide. For example, if the purpose of decreasing the frequencies usable by the STA 102 in multi-link communication is to save power by decreasing the communication amount in the self-apparatus, or reduce interference with another communication apparatus, the effect can be improved by releasing a frequency that can use a wide bandwidth. Note that if the frequencies used in multi-link communication include a plurality of frequencies whose usable bandwidths are widest or narrowest, the STA 102 can select a link corresponding to one of the frequencies based on a random number, another condition, or the like. Alternatively, the STA 102 can set a predetermined threshold, and select a link corresponding to one frequency from the frequencies whose usable bandwidths are wider or narrower than the threshold based on a random number, another condition, or the like. Note that the STA 102 can maintain a link that uses a frequency whose usable bandwidth is widest or narrowest among the frequencies used in multi-link communication, and select a link to be deleted from the remaining links. The STA 102 can set a predetermined threshold, and then maintain a link that uses a frequency whose usable bandwidth is wider or narrower than the threshold, and select a link to be deleted from the remaining links.

The STA 102 can use, as the predetermined condition, a condition associated with the frequency bands to which the frequencies used in multi-link communication belong. For example, the STA 102 can select, as a link to be deleted, a link corresponding to a frequency belonging to a specific frequency band. Alternatively, the STA 102 can maintain the link corresponding to the frequency belonging to the specific frequency band, and select a link to be deleted from the remaining links. For example, assume that the frequencies used by the STA 102 in multi-link communication are frequencies belonging to the 2.4-GHz band, the 5-GHz band, and the 6-GHz band, respectively. In this case, the STA 102 can maintain the link corresponding to the frequency belonging to the 6-GHz band, and select a link to be deleted from the remaining links. By maintaining the link corresponding to the frequency belonging to the 6-GHz band, a relatively higher communication rate, high throughput, delay reduction, and the like can be implemented. Alternatively, the STA 102 can maintain the link corresponding to the frequency belonging to the 2.4-GHz band, and select a link to be deleted from the remaining links. By maintaining the link corresponding to the frequency belonging to the 2.4-GHz band, it is possible to perform communication with the AP 101 within a wider range. Alternatively, the STA 102 can maintain the link corresponding to the frequency belonging to the 5-GHz band, and select a link to be deleted from the remaining links. Since the 5-GHz band is a frequency band having the advantages of the 2.4-GHz band and the 6-GHz band, it is possible to perform communication with high communication quality within a relatively wide range. If the frequencies used in multi-link communication include a plurality of frequencies belonging to the same frequency band, the STA 102 can select a link to be deleted from the links corresponding to the frequencies belonging to the same frequency band. Even if the frequency bands to which the frequencies used by the self-apparatus in multi-link communication are different from each other, the STA 102 can preferentially select a link that uses a frequency included in a combination of frequencies relatively close to each other. This can increase the frequency interval between the frequencies that are maintained as frequencies used by the STA 102 in multi-link communication.

The STA 102 can use, as the predetermined condition, a condition associated with a specific frequency. For example, if the frequencies used in multi-link communication include a frequency that needs to implement the DFS function, the STA 102 can preferentially select, as a link to be deleted, a link corresponding to the frequency. This eliminates the necessity of executing the DFS function, and can avoid the possibility that the frequency is changed due to detection of a radar. On the other hand, the STA 102 can maintain the link corresponding to the frequency that needs to implement the DFS function, and preferentially select a link to be deleted from the remaining links. This allows the STA 102 to maintain the link in which a relatively high communication rate is obtained. If the frequencies used by the self-apparatus in multi-link communication include the PSC, the STA 102 can preferentially select, as a link to be deleted, a link corresponding to the PSC. Thus, it is possible to execute multi-link communication using a frequency used by a small number of communication terminals. On the other hand, the STA 102 can maintain the link corresponding to the PSC, and preferentially select a link to be deleted from the remaining links. This can reduce the number of frequencies usable in multi-link communication while ensuring connectivity with the AP 101.

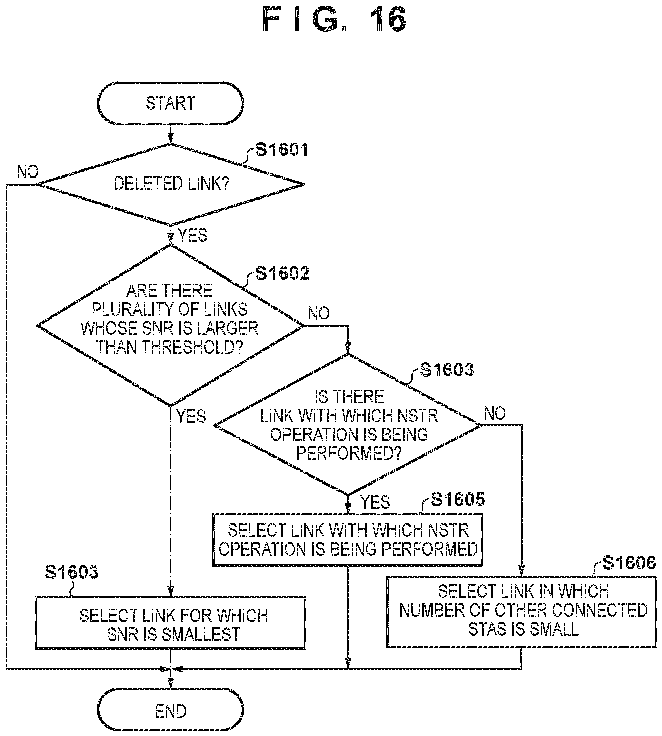

Fig. 16 shows an example of a flowchart in a case where the STA 102 requests the AP 101 to delete a link according to this embodiment. In this flowchart, as described above, assume that the three links 121 to 123 are established, as links usable in multi-link communication, between the AP 101 and the STA 102. Then, the STA 102 determines whether to delete any one of the three links (step S1601). For example, the STA 102 may execute the determination processing when the self-apparatus is connected to the AP 101 or may periodically execute the determination processing. In a case where a communication traffic amount processed by the self-apparatus decreases, the STA 102 may execute the determination processing. For example, in a case where the communication frequency or communication amount of communication with the AP 101 is smaller than a threshold (the amount of communicated data or the number of data packets is smaller than a predetermined threshold), or the like, the STA 102 can determine to delete any one of the links. In a case where the number of other connected STAs in the links 121 to 123 exceeds a threshold, the STA 102 can determine to delete any one of the links. In a case where the STA 102 accepts, at the input of a setting change by the user, an instruction to delete a link, the STA 102 can determine to delete any one of the links. In a case where the self-apparatus is removed from a power supply, or a case where a remaining battery amount is equal to or smaller than a predetermined threshold, the STA 102 can determine to delete any one of the links. Furthermore, in a case where communication of a specific kind of data such as print data or image (photo, moving image, or the like) data in communication with the AP 101 is complete or a case where communication of data of a specific application is complete, the STA 102 can determine to delete any one of the links. Note that in a case where the STA 102 detects that traffic is congested in the links 121 to 123, the STA 102 can determine to delete any one of the links. Note that in a case where the number of links established with the AP 101 is 1, the STA 102 determines that it is impossible to delete the link.

If the STA 102 determines to delete a link (YES in step S1601), it determines, for example, whether there exists frequencies whose communication qualities are lower than that of another frequency (step S1602). If there exists frequencies whose communication qualities are lower than that of another frequency (YES in step S1602), the STA 102 selects a frequency with the lowest communication quality from them (step S1603). For example, the STA 102 compares the SNRs or the like of frames received from each AP 101 at the frequencies used in multi-link communication with the AP 101. Then, if there exist one or more frequencies whose differences in SNR from another frequency are larger than a predetermined threshold, the STA 102 can select a frequency whose SNR is lowest among the frequencies. Note that the STA 102 may perform the determination processing based on the presence/absence of a frequency at which the index (SNR or the like) that can specify communication quality at each frequency exceeds a predetermined threshold. In this case, the STA 102 can select a frequency at which the numerical value of the index is lowest among the one or more frequencies at each of which the index exceeds the predetermined threshold.

If the difference in communication quality between the frequencies is not large (NO in step S1602), the STA 102 determines the presence/absence of a link with which the self-apparatus cannot execute the STR operation with respect to each of the links (links 121 to 123) used in multi-link communication (step S1604). If there is a combination of links with which the STR operation is impossible (YES in step S1604), the STA 102 decides, as a link to be deleted, a link included in the combination (step S1605). If there is no link with which the NSTR operation is performed (NO in step S1604), the STA 102 selects, as a link to be deleted, a link in which the number of other connected STAs is large (step S1606). Note that in step S1606, the STA 102 can select a link to be deleted using another method described above, instead of the method of selecting, as a link to be deleted, a link in which the number of other connected STAs is large. Note that as a method of selecting a link to be deleted from the links used by the STA 102 in multi-link communication, the plurality of methods described above may be used in combination, and can be executed in arbitrary order when they are used in combination. That is, the STA 102 can select a frequency using the above-described arbitrary predetermined conditions individually or in combination.

A communication sequence with the AP 101 when requesting the AP 101 to delete a link used by the STA 102 in multi-link communication according to this embodiment will be described using an example of a sequence shown in Fig. 11. Note that a description of the same operations as those described with reference to Fig. 11 in the second embodiment will be omitted. In this example, the STA 102 requests the AP 101 to delete a link during multi-link communication. First, by using a Beacon, the AP 101 notifies link information including frequencies usable in multi-link communication with the self-apparatus (F1101). Then, the STA 102 selects, between F1101 and F1102, a link to be deleted, and requests the AP 101 to delete the link (F1102). For example, the STA 102 can select a link to be deleted using the example of the flowchart shown in Fig. 16. For example, the STA 102 can request the AP 101 to delete the link using a Link Reconfiguration Request. As an example, the AP 101 can use a Reconfiguration Multi-Link field 804 of a Link Reconfiguration Request frame 822 shown in Fig. 8B. The Reconfiguration Multi-Link field 804 can store a value of 3 in an Operation Update type subfield to indicate deletion of the link. Upon receiving the Link Reconfiguration Request frame, the AP 101 determines whether the requested link can be deleted, and notifies the STA 102 of a determination result (F1103). For example, the AP 101 can notify the STA 102 of a response to the link deletion request using a Link Reconfiguration Response. Then, communication is executed between the AP 101 and the STA 102 using the frequencies used in multi-link communication after update without using the frequency the use of which has been stopped.

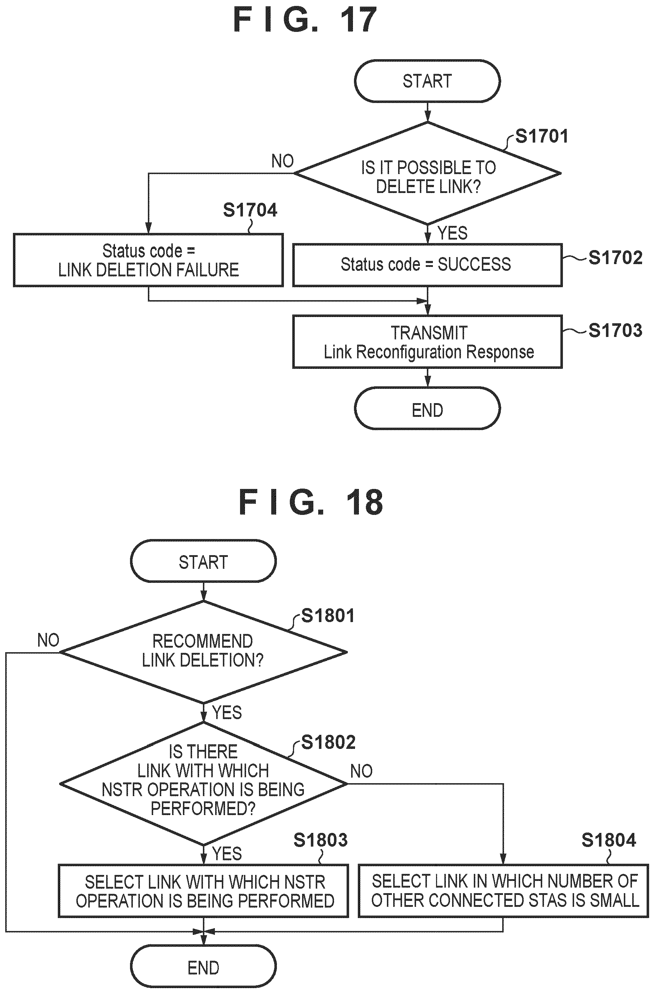

Fig. 17 shows an example of a flowchart when, based on a request from the STA 102, the AP 101 determines whether it is possible to delete the link and transmits a response. First, upon receiving a link deletion request from the STA 102, the AP 101 determines whether it is possible to delete the link (step S1701). If it is possible to delete the link (YES in step S1701), the AP 101 sets Success in a Status code (step S1702). If it is impossible to delete the link (NO in step S1701), the AP 101 indicates the reason for a failure in the Status code (step S1704). If, for example, the reason for a failure of link deletion is that a large amount of communication data is buffered, the AP 101 can notify the STA 102 of a Status code of 142. The notification of the Status code is performed for all the links, including the link to be deleted, requested by the STA 102. The AP 101 notifies the STA 102 of a response including the Status code. For example, the AP 101 can notify the STA 102 of the Link Reconfiguration Response including the Status code (step S1703).

As described above, according to this embodiment, to delete a link used by the STA 102 in multi-link communication, the STA 102 selects a frequency the use of which is to be stopped, and requests the AP 101 to delete the link that uses the selected frequency. The frequency corresponding to the link to be deleted can be selected based on a predetermined condition associated with communication quality, the STR operation, interference, usable frequency bandwidths, frequency bands, a specific frequency, and the like. As described above, according to this embodiment, the STA 102 selects a frequency as the frequency used by the link to be deleted so as to reduce influence on the performance of multi-link communication or improve the performance. In multi-link communication, this can suppress the performance from lowering due to deletion of the link, and improve the performance.

### (Sixth Embodiment)

In this embodiment, a description will be made using an operation example in a case where an AP 101 recommends an STA 102 to delete a link used in multi-link communication with the STA 102 and the STA 102 requests, in response to this, the AP 101 to delete the link. First, similar to the fifth embodiment, assume that three links 121 to 123 are established, between the AP 101 and the STA 102, as links used in multi-link communication. Then, the AP 101 recommends the STA 102 to delete a link satisfying a predetermined condition from the three links. The STA 102 determines whether to delete the link recommended by the AP 101. If it is determined to delete the link, the STA 102 requests the AP 101 to delete the link. An exchange sequence between the AP 101 and the STA 102 and the formats of frames to be used will be described below.

A communication sequence with the STA 102 when the AP 101 recommends the STA 102 to delete a link used in multi-link communication according to this embodiment will be described with reference to an example of a sequence shown in Fig. 13. Note that a description of the same operations as those described with reference to Fig. 13 in the third embodiment will be omitted. In this example, the AP 101 recommends the STA 102 to delete a link during multi-link communication. First, by using a Beacon, the AP 101 notifies link information including frequencies usable in multi-link communication with the self-apparatus (F1301). Then, the AP 101 selects, between F1301 and F1302, a link to be deleted, and recommends the STA 102 to delete the link (F1302). For example, the AP 101 can recommend the STA 102 to delete the link using a Link Recommendation frame. Upon receiving the link deletion recommendation from the AP, the STA 102 determines whether to delete the link. If it is determined to delete the link, the STA 102 requests the AP 101 to delete the link (F1303). For example, the STA 102 can request to delete the link using a Link Reconfiguration Request. Note that when recommending to delete the link, the AP 101 may recommend the STA 102 to delete the link by including information for specifying the link to be deleted. The STA 102 may request to delete the link recommended by the AP 101 or request to delete another link selected by the self-apparatus. Upon receiving the link deletion request from the STA 102, the AP 101 determines whether the requested link can be deleted, and notifies the STA 102 of a determination result (F1304). For example, by using a Link Reconfiguration Response, the AP 101 can transmit, to the STA 102, a response to the link deletion request. Then, communication is executed between the AP 101 and the STA 102 using the frequencies used in multi-link communication after update without using the frequency the use of which has been stopped.

Fig. 18 shows an example of a flowchart when the AP 101 selects a link to be recommended to the STA 102. In this flowchart, as described above, assume that the three links 121 to 123 are established, as links used in multi-link communication, between the AP 101 and the STA 102. Then, the AP 101 determines whether to delete any one of the three links (step S1801). For example, the AP 101 can execute the determination processing when the AP 101 is connected to the STA 102. The AP 101 can periodically execute the determination processing after the AP 101 is connected to the STA 102. In a case where a communication frequency or a communication amount with the STA 102 is smaller than a threshold (the amount of communicated data or the number of data packets is smaller than a predetermined threshold), or the like, the AP 101 can determine to recommend to delete a link. In a case where the number of other connected STAs in the links 121 to 123 exceeds a threshold, the AP 101 can determine to recommend to delete a link. In a case where the AP 101 accepts, at the input of a setting change by the user, an instruction to delete a link with the STA 102, the AP 101 can determine to recommend to delete a link. In a case where the self-apparatus is removed from a power supply, or a case where a remaining battery amount is equal to or smaller than a predetermined threshold, the AP 101 can determine to recommend to delete a link. Furthermore, in a case where communication of a specific kind of data such as print data or image (photo, moving image, or the like) data in communication with the STA 102 is complete or a case where communication of data of a specific application is complete, the AP 101 can determine to delete a link. Note that in a case where the AP 101 detects that traffic is congested in the links 121 to 123, the AP 101 can determine to recommend to delete a link. Note that in a case where the number of links established with the STA 102 is 1, the AP 101 determines that it is impossible to delete the link.

If the AP 101 determines to recommend to delete a link (YES in step S1801), it determines, for example, the presence/absence of a link with which the self-apparatus or the STA 102 cannot execute the STR operation with respect to each of the links (links 121 to 123) used in multi-link communication (step S1802). If there is a combination of links with which the STR operation is impossible (YES in step S1802), the AP 101 decides, as a link to be deleted, a link included in the combination (step S1803). If there is no link with which the NSTR operation is performed (NO in step S1802), the AP 101 selects, as a link to be deleted, a link in which the number of other connected STAs is large (step S1804). Note that in step S1804, the AP 101 can select a link to be deleted using another method described above, instead of the method of selecting, as a link to be deleted, a link in which the number of other connected STAs is large. Note that as a method of selecting a link to be deleted from the links used by the AP 101 in multi-link communication with the STA 102, the plurality of methods described above may be used in combination, and can be executed in arbitrary order when they are used in combination. That is, the AP 101 can select a frequency to be recommended to the STA 102 using the above-described arbitrary predetermined conditions individually or in combination.

The AP 101 can recommend the STA 102 to delete a link using a Link Recommendation frame. Alternatively, the AP 101 can recommend the STA 102 to delete a link using a Link Reconfiguration Notify frame. For example, the AP 101 can use an AID Bitmap element 811 and a Multi-Link Traffic Indication element 812 in a Link Recommendation frame 824 shown in Fig. 8D. By using the AID Bitmap element 811, the AP 101 can indicate an STA that is recommended to delete a link by the Link Recommendation frame 824. For example, each bit included in the AID Bitmap element 811 corresponds to an AID for uniquely specifying each STA, and a bit corresponding to an STA that is recommended to delete a link can be set to 1. Note that by setting a plurality of bits included in the AID Bitmap element 811 to 1, it is possible to recommend a plurality of STAs to delete a link at once. The AP 101 can use the Multi-Link Traffic Indication element 812 to indicate a recommended link. For example, the AP 101 can set 0 in a Link ID corresponding to a recommended link in the Multi-Link Traffic Indication element 812 for each AID indicated by the AID Bitmap element 811. By confirming the AID Bitmap element 811 of the received Link Recommendation frame 824, the STA 102 can recognize whether the self-apparatus is recommended to delete a link. Similarly, the STA 102 can recognize the Link ID of the recommended link by confirming the Multi-Link Traffic Indication element 812. That is, when the Link ID corresponding to the link used in multi-link communication with the AP 101 is set to 0, the STA 102 can recognize that it is recommended to delete the link. Note that the AP 101 can transmit a Beacon or the like including the Multi-Link Traffic Indication element 812 instead of the Link Recommendation frame 824. The Beacon or the like can include a Probe Response, a FILS Discovery frame, and a Link Reconfiguration Notify frame 821. Note that the AP 101 can transmit the Link Reconfiguration Notify frame 821 including the Reconfiguration Multi-Link element to the specific STA 102, thereby recommending the STA 102 to delete the link.

Upon receiving the Multi-Link Traffic Indication element 812, the STA 102 can determine whether to request to delete the recommended link. Note that the STA 102 can request to delete another link without requesting the AP 101 to delete the recommended link. In this case, the STA 102 can select a link to be deleted, in accordance with an example of a flowchart shown in Fig. 16. Then, the AP 101 can determine whether to permit deletion of a link, in accordance with an example of a flowchart shown in Fig. 17.

As described above, according to this embodiment, in order to recommend to decrease the number of links used concurrently in multi-link communication with the STA 102, the AP 101 selects a frequency, and recommends the STA 102 to delete a link that uses the selected frequency. A frequency corresponding to a link to be deleted can be selected based on a predetermined condition such as a condition associated with the STR operation, a condition associated with interference, a condition associated with usable frequency bandwidths, a condition associated with frequency bands, and a condition associated with a specific frequency. As described above, according to this embodiment, the AP 101 selects a frequency as the frequency used by the link to be deleted in multi-link communication with the STA 102 so as to reduce influence on the performance of multi-link communication or improve the performance. In multi-link communication, this can suppress the performance from lowering due to deletion of a link, and improve the performance.

### (Modification)

A technique of increasing the number of links used in multi-link communication between the AP 101 and the STA 102 or a function of decreasing the number of links has been described above. However, this technique is also applicable to multi-link communication between a plurality of STAs. Furthermore, the AP 101 and the STA 102 can simultaneously execute the functions of increasing and decreasing the number of links used in multi-link communication, thereby changing a frequency used by each link, or requesting or recommending to change the frequency. In addition, an example of selecting a frequency to be used or a frequency the use of which is to be stopped in a case where the number of links used concurrently in multi-link communication is increased/decreased has been described above. However, the timing of increasing/decreasing the number of links and the timing of selecting a frequency to be used or a frequency the use of which is to be stopped can be independent. For example, the AP 101 can notify the STA 102 of frequencies the number of which is larger than the number of links used concurrently in multi-link communication, and can execute multi-link communication with the STA 102 using some of those frequencies. In this case, the AP 101 can add a frequency usable in multi-link communication or stop the use of the frequency, independently of an increase/decrease in number of links used concurrently in multi-link communication.

### Other Embodiments

Embodiment(s) of the present invention can also be realized by a computer of a system or apparatus that reads out and executes computer executable instructions (e.g., one or more programs) recorded on a storage medium (which may also be referred to more fully as a 'non-transitory computer-readable storage medium') to perform the functions of one or more of the above-described embodiment(s) and/or that includes one or more circuits (e.g., application specific integrated circuit (ASIC)) for performing the functions of one or more of the above-described embodiment(s), and by a method performed by the computer of the system or apparatus by, for example, reading out and executing the computer executable instructions from the storage medium to perform the functions of one or more of the above-described embodiment(s) and/or controlling the one or more circuits to perform the functions of one or more of the above-described embodiment(s). The computer may comprise one or more processors (e.g., central processing unit (CPU), micro processing unit (MPU)) and may include a network of separate computers or separate processors to read out and execute the computer executable instructions. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)^{™}), a flash memory device, a memory card, and the like.

While the present invention has been described with reference to embodiments, it is to be understood that the invention is not limited to the disclosed embodiments. The scope of the following claims is to be accorded the broadest interpretation so as to encompass all such modifications and equivalent structures and functions.

## Claims

1. A communication apparatus (101, 102) capable of executing, with another communication apparatus (101, 102), multi-link communication that complies with an IEEE802.11 standard series and uses a plurality of links corresponding to a plurality of frequencies, comprising:
a selection means (301) configured to select, in a case where the number of links used concurrently in the multi-link communication is increased, a frequency associated with a link to be added from a plurality of candidate frequencies, based on a predetermined condition; and
a notification means (303) configured to notify the another communication apparatus of the frequency selected by the selection means (301).

2. The communication apparatus according to claim 1, wherein
the communication apparatus is an access point apparatus (101), and the another communication apparatus is a station apparatus (102), and
the notification means (303) notifies the frequency selected by the selection means (301) to the plurality of station apparatuses.

3. The communication apparatus according to claim 1, wherein
the communication apparatus is a station apparatus (102), and the another communication apparatus is an access point apparatus (101), and
the notification means (303) requests the access point apparatus (101) to add the link associated with the frequency selected by the selection means (301).

4. The communication apparatus according to claim 1, wherein
the communication apparatus is an access point apparatus (101), and the another communication apparatus is a station apparatus (102), and
the notification means (303) recommends the station apparatus (102) to add the link associated with the frequency selected by the selection means (301).

5. The communication apparatus according to any one of claims 1, 2 or 4, wherein
the predetermined condition is a condition associated with the number of other communication apparatuses that use each of the candidate frequencies, and
in a case where the number of other communication apparatuses that use a first frequency included in the candidate frequencies is smaller than the number of other communication apparatuses that use a second frequency included in the candidate frequencies and different from the first frequency, the selection means preferentially selects the first frequency.

6. The communication apparatus according to claims 1 or 3, wherein
the communication apparatus is a station apparatus (102), and the another communication apparatus is an access point apparatus (101),
the predetermined condition is a condition associated with the number of other station apparatuses that communicate with the access point apparatus (101) using each of the candidate frequencies, and
in a case where the number of other station apparatuses that communicate with the access point apparatus (101) using a first frequency included in the candidate frequencies is smaller than the number of other station apparatuses that communicate with the access point apparatus (101) using a second frequency included in the candidate frequencies and different from the first frequency, the selection means (301) preferentially selects the first frequency.

7. The communication apparatus according to any one of claims 1 to 4, wherein
the predetermined condition is a condition associated with Simultaneous Transmit and Receive (STR) in which transmission/reception operations in the plurality of links are independently performed, and
the selection means (301) preferentially selects, from the candidate frequencies, a frequency with which the STR can be executed with respect to a frequency used in the multi-link communication.

8. The communication apparatus according to any one of claims 1 to 4, wherein
the predetermined condition is a condition associated with frequency intervals between the candidate frequencies and the frequency used in multi-link communication, and
in a case where the frequency interval between a first frequency included in the candidate frequencies and the frequency used in the multi-link communication is larger than the frequency interval between a second frequency included in the candidate frequencies and different from the first frequency and the frequency used in the multi-link communication, the selection means (301) preferentially selects the first frequency.

9. The communication apparatus according to any one of claims 1 to 4, wherein
the predetermined condition is a condition associated with frequency bandwidths usable by the candidate frequencies, and
in a case where the frequency bandwidth usable by a first frequency included in the candidate frequencies is wider than the frequency bandwidth usable by a second frequency included in the candidate frequencies and different from the first frequency, the selection means (301) preferentially selects the first frequency.

10. The communication apparatus according to any one of claims 1 to 4, wherein
the predetermined condition is a condition associated with frequency bands to which the candidate frequencies belong, and
the selection means (301) preferentially selects a frequency belonging to a predetermined frequency band from the candidate frequencies.

11. A control method executed by a communication apparatus (101, 102) capable of executing, with another communication apparatus (101, 102), multi-link communication that complies with an IEEE802.11 standard series and uses a plurality of links corresponding to a plurality of frequencies, comprising:
selecting (S406, S407, S408, S1005, S1007, S1008, S1009, S1405, S1406, S1407), in a case where the number of links used concurrently in the multi-link communication is increased, a frequency associated with a link to be added from a plurality of candidate frequencies, based on a predetermined condition; and
notifying (F502, F1102, F1302,) the another communication apparatus of the selected frequency.

12. A program configured to cause a computer to function as a communication device defined in any one of claims 1 to 10.
